# FASCICULE DE BREVET EUROPEEN

(11) **EP 0 929 498 B1**
(45) Date de publication et mention de la délivrance du brevet: **21.11.2001**
(21) Numéro de dépôt: 97940197.3
(22) Date de dépôt: 08.09.1997
(51) Int. Cl.: B67C 3/04, B67C 3/20, B67C 3/28, G01G 13/06, G01G 17/06

(54) **PROCEDE, DISPOSITIF ET INSTALLATION POUR LA DISTRIBUTION EN QUANTITES DOSEES DE LIQUIDE**
VERFAHREN, VORRICHTUNG UND ANLAGE ZUM AUSGEBEN DOSIERTEN MENGEN FLÜSSIGKEIT
METHOD, DEVICE AND INSTALLATION FOR DISPENSING DOSED AMOUNTS OF LIQUID

(30) Priorité: 06.09.1996 FR 9611004; 23.05.1997 FR 9706436
(43) Date de publication de la demande: 21.07.1999
(73) Titulaire: Solignac, Jean Pierre, 34270 Saint Mathieu de Tréviers (FR)
(72) Inventeur: Solignac, Jean Pierre, 34270 Saint Mathieu de Tréviers (FR)
(74) Mandataire: Ravina, Bernard
(86) Numéro de dépôt international: FR9701582
(87) Numéro de publication internationale: WO9809911

(56) Documents cités:
- EP-A- 0 508 289
- EP-A- 0 516 573
- EP-A- 0 616 276
- EP-B- 0 067 466
- DE-A- 2 918 669
- DE-A- 3 303 583
- DE-A- 3 332 236
- DE-A- 4 314 343
- DE-B- 1 152 634
- FR-A- 2 421 142
- FR-A- 2 615 845
- US-A- 4 030 640
- US-A- 5 402 913

## Description

La présente inention concerne un procédé de distribution en quantités pondérales dosées, d'un ou plusieurs liquides contenu(s) dans un ou plusieurs réservoir(s), grâce auquel chaque dose est délivrée avec une grande précision, de l'ordre de 0.5 milligramme, ainsi qu'un dispositif distributeur et une installation de distribution d'un ou plusieurs liquides à un ou plusieurs récipient(s).

Pour un grand nombre d'activités, parmi lesquelles on peut citer, sans que la liste soit limitative: la parfumerie, les arômes, la cosmétique, la chimie fine, la pharmacie, les colorants, teintures et peintures, l'agro-alimentaire, les vins et spiritueux, etc..., il est nécessaire de fabriquer des "compositions", tant en laboratoire, pour les essais ou l'échantillonnage, qu'en production. Ces compositions sont des mélanges de matières premières liquides ou solides, suivant une formule en dosage précis. La réalisation manuelle traditionnelle de ces compositions est longue et peut donner lieu à de multiples erreurs de fabrication. De plus, il est difficile d'atteindre des précisions de l'ordre du demi-milligramme, voir par exemple EP 0 067466 B.

La présente invention permet de remédier à ces inconvénients, pour les compositions de matières premières liquides. Elle permet également de délivrer des quantités précises d'un liquide unique dans plusieurs récipients.

A cet effet, le procédé de distribution en quantités dosées d'un liquide contenu dans un réservoir de stockage, raccordé à une conduite de distribution pourvue d'un ajutage d'écoulement du liquide vers un récipient associé à un élément indicateur, délivrant sous forme d'un signal une valeur représentative de la quantité de liquide présente dans le récipient et ladite conduite à distance de l'ajutage, étant associé à un élément d'obturation lequel, à la commande, obture ou libère le passage du liquide au travers de la conduite, du réservoir vers l'ajutage de distribution, le diamètre de l'ajutage de distribution étant tel que la colonne de liquide, dans la portion de conduite entre l'ajutage et l'élément d'obturation, lorsque ce demier obture le passage du liquide, puisse y être immobilisée sous l'effet notamment des forces de tensions superficielles, se caractérise essentiellement en ce qu'il consiste dans les étapes fonctionnelles suivantes, données par ordre chronologique :
a) - libérer le passage de liquide entre le réservoir et l'ajutage par action sur l'élément d'obturation, de façon que le liquide puisse remplir la portion de conduite entre l'élément d'obturation et l'ajutage de distribution,
b) - obturer le passage de liquide par action sur l'élément d'obturation, pour interrompre l'écoulement du liquide,
c) - appliquer sur la colonne de liquide, située entre l'élément d'obturation et l'ajutage de distribution, au moins une impulsion mécanique d'amplitude et/ou d'intensité calibrée, pour expulser de la colonne de liquide, au travers de l'ajutage de distribution, vers le récipient, une micro quantité de liquide,
d) - comparer la valeur donnée par l'élément indicateur à une valeur de consigne C1 préétablie, représentative de la valeur de la dose à délivrer, une valeur de tolérance △C1 étant attachée à la valeur C1,
e) et répéter les étapes c) et d) tant que la valeur donnée par l'élément indicateur n'est pas comprise dans la plage de tolérance attachée à la valeur de consigne C1.

Selon la forme préférée de réalisation, l'élément indicateur donne un signal représentatif du poids de la quantité de liquide dans le récipient.

Il est nécessaire de pouvoir distribuer dans le récipient une quantité relativement importante de liquide tout en conservant une précision de l'ordre du demi-milligramme. Ainsi, selon une autre caractéristique du procédé selon l'invention, lors de l'étape a), pendant laquelle le passage de liquide entre le réservoir et l'ajutage est libéré et du liquide est également déversé dans le récipient, la valeur donnée par l'élément indicateur est comparée en continu à une valeur de consigne C0, inférieure à la valeur de consigne C1, et voisine de cette demière, et l'étape b) dudit procédé est engagée lorsque la valeur donnée par l'élément indicateur est égale à la valeur de la consigne C0, les étapes c), d), et e), étant ensuite successivement engagées.

Cette disposition permet d'assurer tant la rapidité du dosage que sa précision.

Selon une autre caractéristique de l'invention, les impulsions mécaniques, devant être communiquées à la colonne de liquide, sont appliquées sur la conduite.

Selon une autre caractéristique de l'invention, les impulsions mécaniques, devant être communiquées à la colonne de liquide, sont appliquées directement sur cette demiére.

L'invention à également pour objet un dispositif distributeur pour la délivrance en quantités dosées d'un liquide, caractérisé en ce qu'il comprend :
- un réservoir de stockage contenant le liquide à distribuer,
- une conduite de distribution raccordée au réservoir et pourvue d'un ajutage d'écoulement du liquide vers un récipient associé à un élément indicateur délivrant sous forme d'un signal, une valeur représentative de la quantité de liquide présente dans le récipient,
- un élément d'obturation associé à la conduite et placé à distance de l'ajutage, obturant ou libérant à la commande le passage de liquide entre le réservoir et l'ajutage, l'aire de la section de passage que détermine l'ajutage étant telle que, lorsque l'élément obturateur obture le passage, la cotonne de liquide présente dans la portion de conduite entre l'ajutage et l'élément d'obturation, se trouve immobilisée dans cette portion, sous l'effet notamment des forces de tensions superficielles,
- un moyen d'impulsion, situé entre l'élément d'obturation et l'ajutage de délivrance du liquide, pour communiquer à la colonne de liquide située entre l'élément d'obturation et l'ajutage de distribution, au moins une impulsion mécanique calibrée, sous l'effet de laquelle une micro-quantité de liquide est expulsée de la colonne de liquide

Selon une de ses formes de réalisation, le dispositif distributeur comprend un corps rigide comprenant un premier perçage traversant dans lequel est engagée la conduite avec un jeu fonctionnel réduit, ce corps rigide, comprenant un deuxième perçage, de préférence rectiligne, débouchant d'une part dans le premier perçage traversant et d'autre part sur l'une des faces du corps rigide, ledit second perçage recevant le moyen d'impulsion. Selon cette forme de réalisation, le moyen d'impulsion agit sur la conduite et cette dernière, selon un autre aspect de l'invention, est élastiquement déformable au moins dans le premier perçage du corps rigide.

Selon une autre caractéristique de l'invention, le moyen d'impulsion comprend un poussoir mobile transversalement par rapport à la conduite et monté en coulissement dans le second perçage au moins par sa partie antérieure, pour pouvoir agir par l'extrémité libre de ladite partie antérieure, en poussée sur la conduite. Ce poussoir peut être manoeuvré manuellement mais de préférence, de façon que les impulsions communiquées puissent être parfaitement calibrées, le moyen d'impulsion comprend également un mécanisme d'actionnement apte à mobiliser le poussoir selon un mouvement bref de translation vers la conduite et ce selon une amplitude et une accélération déterminées et parfaitement contrôlées, Ce mécanisme d'actionnement, destiné à coopérer avec l'extrémité libre de la partie postérieure de la tige, peut être intégré au corps du dispositif mais selon un aspect avantageux de l'invention conduisant à une simplification, ce mécanisme d'actionnement du poussoir est externe au dit corps rigide et indépendant de ce dernier.

L'élément obturateur peut être disposé sur la portion de conduite située entre le corps et le réservoir ou bien être associé à l'embout de délivrance du réservoir, mais selon un aspect avantageux de l'invention, le corps du dispositif distributeur, en amont du second perçage en considérant la direction d'écoulement du liquide dans la conduite, est pourvu d'un troisième perçage, de préférence rectiligne, débouchant d'une part dans le premier perçage traversant et d'autre part sur l'une des faces du corps rigide, ledit troisième perçage recevant l'élément d'obturation.

Selon une autre caractéristique de l'invention, l'élément obturateur comprend une tige montée, au moins par sa partie antérieure dans le troisième perçage, venant en position d'obturation, par l'extrémité libre de sa partie antérieure, pincer la conduite souple. Le passage interne de la conduite se trouve donc obturé par aplatissement de la paroi de ladite conduite sur elle-même.

L'actionnement de la tige peut être manuel mais de préférence, selon un autre aspect de l'invention, l'élément d'obturation comprend un mécanisme d'actionnement de la tige destiné à coopérer avec la partie postérieure de cette dernière, ce mécanisme d'actionnement étant de préférence externe au corps rigide.

De préférence, selon un autre aspect de l'invention, la tige est filetée et le troisième perçage est taraudé pour recevoir ladite tige en vissage. En ajustant par vissage le degré d'enfoncement de la tige dans le taraudage et dans la conduite, il est possible d'ajuster le degré d'étranglement de la conduite par la tige, donc la section du passage au niveau de l'élément obturateur et par voie de conséquence, le débit d'écoulement de liquide.

Pour sa manoeuvre par le mécanisme d'actionnement, la tige, selon l'extrémité libre de sa partie postérieure, est dotée d'une empreinte avec laquelle coopère en relation d'emboîtement de forme et de transmission de couple et de mouvement de rotation, un embout d'entraînement, rotatif, motorisé, du mécanisme d'actionnement. Selon une forme préférée de réalisation, le mécanisme d'actionnement de la tige de l'élément obturateur est équipé d'un organe moteur à l'arbre de sortie duquel est accouplé l'embout d'entraînement.

Dans la forme de réalisation précédemment décrite, le moyen d'impulsion et l'élément obturateur agissent sur la paroi de la conduite.

Selon une autre forme de réalisation, le dispositif distributeur selon l'invention, est remarquable notamment en ce que la conduite comprend une section amont raccordée au réservoir de stockage et une section aval en extrémité libre de laquelle est formée l'ajutage de distribution et que l'élément d'obturation est une vanne, du type normalement fermé à laquelle est raccordée d'une part la section amont de conduite et d'autre part la section aval de conduite, ladite vanne comprenant un corps de vanne dans lequel est formé un logement comprenant une partie amont et une partie aval en communication l'une avec l'autre par une partie médiane, de forme cylindrique, à l'embouchure de laquelle, dans la partie amont du logement, est formé un siège de soupape contre lequel prend appui en position d'obturation une soupape montée mobile dans la partie amont du logement, laquelle partie, par un perçage pratiqué dans le corps de vanne, est en relation avec la section amont de conduite, la section aval de conduite étant quant à elle en relation avec la partie médiane du logement par l'intermédiaire d'un second perçage pratiqué dans le corps de vanne, ledit corps de vanne, selon un axe normal au siège de soupape, étant pourvu d'un troisième perçage traversant, débouchant dans la partie aval du logement, dans lequel perçage est engagée une tige d'actionnement de la soupape, ladite tige étant associée à un mécanisme d'actionnement et ladite vanne étant associée à un moyen d'impulsion.

Selon une autre caractéristique de l'invention, la matière constitutive de la soupape présente une dureté supérieure à celle de la matière constitutive du siège de soupape ce qui permet de réaliser l'autorodage du siège de soupape et d'améliorer l'étanchéité.

Selon une autre caractéristique de l'invention, est prévu un moyen d'aspiration pour ramener par aspiration dans la partie aval de conduite les gouttes de liquide présentes au niveau de l'ajutage de distribution et ce notamment avant application des impulsions sur la colonne de liquide Cette disposition, en évitant que des gouttes de liquides ne tombent par inadvertance dans le récipient, garantit des dosages précis, et reproductibles avec le même degré de précision.

Dans la forme préférée de réalisation, le moyen d'aspiration est constitué par un piston monté dans un alésage pratiqué dans le corps de vanne, ledit alésage étant en communication avec la partie aval du logement et ledit piston étant associé à un mécanisme d'actionnement. Avantageusement, selon un autre aspect de l'invention, le piston et le mécanisme d'actionnement constituent le moyen d'impulsion.

Selon une forme d'exécution particulièrement avantageuse, le piston est formé autour de la tige d'actionnement de la soupape et est fixé à ladite tige; le mécanisme d'actionnement du piston constitue le mécanisme d'actionnement de ladite tige; la tige et la soupape ne sont pas liées l'une à l'autre et ladite tige est mobilisée par son mécanisme d'actionnement depuis une position de repos selon laquelle elle est écartée de la soupape vers l'une de ses positions d'actionnement selon lesquelles, en agissant en poussée sur la soupape, elle maintient cette dernière à écartement de son siège, la valeur de l'écartement entre la soupape et le siège et donc la valeur du débit de liquide, dépendant de la position d'actionnement atteinte par la tige d'actionnement.

Ainsi, en choisissant la position d'actionnement que doit atteindre la tige et en contrôlant cette position il est possible de choisir la valeur du débit de liquide au travers de la vanne et de contrôler parfaitement cette valeur.

Selon une autre caractéristique de l'invention, le mécanisme d'actionnement du moyen d'impulsion et d'actionnement de l'élément obturateur est constitué par une came et par un organe moteur d'entraînement de la came, ladite came étant calée sur l'arbre de sortie rotatif de l'organe moteur.

La présente invention à également pour objet une installation pour délivrer de façon automatique des quantités précises d'un ou plusieurs liquides à un ou plusieurs récipient(s) caractérisée essentiellement en ce qu'elle est équipée d'au moins un dispositif distributeur tel que précédemment défini,

Selon une autre caractéristique, l'installation selon l'invention comporte un premier ensemble support sur lequel sont montés plusieurs dispositifs distributeurs et un second ensemble support sur lequel est ou sont montés le ou les organes moteurs des mécanismes d'actionnement, ladite installation comportant de plus au moins un récipient de liquide(s), au moins un élément indicateur de la quantité de liquide dans le récipient, lequel élément, est apte à émettre un signal représentatif de cette quantité vers une unité de calcul et de commande, programmable, apte à commander et contrôler selon les données d'un programme préétabli, le ou les organes moteurs du ou des mécanismes d'actionnement de l'élément obturateur et du moyen d'impulsion de chaque dispositif distributeur.

Selon une autre caractéristique de l'invention, les ensembles support sont mobiles l'un par rapport à l'autre et l'un au moins des deux ensembles support est mobilisé par rapport à l'autre par un organe moteur commandé par l'unité de contrôle et de commande afin que soient positionnés en vis-à-vis les uns des autres, le ou les organes moteurs et la ou les tiges d'actionnement du dispositif distributeur sélectionné.

D'autres avantages, buts et caractéristiques de l'invention apparaîtront à la lecture de la description d'une forme préférée de réalisation, donnée à titre d'exemple indicatif, en se référant aux dessins annexés en lesquels :
- la figure 1 est une vue en coupe longitudinale d'un dispositif distributeur selon une première forme de réalisation,
- la figure 2 est une vue en coupe longitudinale d'un dispositif distributeur selon une seconde forme de réalisation,
- la figure 3 est une vue en coupe, selon un plan vertical, d'une installation équipée de dispositifs distributeurs selon la première forme de réalisation,
- la figure 4 est une vue en coupe selon la ligne AA de la figure 3,
- la figure 5 est une vue en coupe selon un plan vertical, d'une installation équipée de dispositifs distributeurs selon la seconde forme de réalisation,
- les figures 6 et 7 sont des vues d'une installation selon une forme de réalisation.

Tel que représenté le dispositif distributeur 1, 2 selon l'invention, comprend un réservoir de stockage 3 du liquide à distribuer à quantités dosées, comportant un embout de délivrance du liquide auquel est fixé par tout moyen connu, une conduite de distribution 4 pourvue en extrémité libre d'un ajutage 5 d'écoulement du liquide vers un récipient 6 associé à un élément indicateur 7 délivrant sous forme d'un signal une valeur représentative de la quantité de liquide présente dans le récipient 6. Le dispositif distributeur comprend de plus un élément 8 d'obturation associé à la conduite et placé à distance de l'ajutage 5, obturant ou libérant à la commande le passage de liquide dans la conduite entre le réservoir 3 et l'ajutage 5. Cet ajutage, de forme circulaire, détermine une section de passage circulaire dont la valeur de l'aire est égale ou inférieure à celle nécessaire pour assurer lorsque l'élément obturateur est en position d'obturation du passage de liquide, l'immobilisation de la colonne de liquide dans la portion de conduite comprise entre ledit ajutage et ledit élément d'obturation. Cette immobilisation est essentiellement due aux forces de tensions superficielles. Le diamètre de l'ajutage sera fonction des caractéristiques physiques du liquide à distribuer et donc fonction notamment de sa viscosité. Entre l'élément d'obturation et l'ajutage de délivrance du liquide, le dispositif de distribution est équipé d'un moyen d'impulsion 9 pour communiquer à la colonne de liquide située entre l'élément d'obturation 8 et l'ajutage de distribution 5, au moins une impulsion mécanique calibrée sous l'effet de laquelle une micro quantité de liquide est expulsée de la colonne de liquide. Ce moyen d'impulsion n'est activé qu'après fermeture de la section de passage du liquide par l'élément obturateur 8. Pour un dosage d'une quantité déterminée de liquide, le fonctionnement du dispositif est le suivant : l'élément d'obturation 8 est placé d'abord en position d'ouverture du passage interne de la conduite de façon que le liquide puisse s'écouler du réservoir 3 vers le récipient 6. La quantité demandée de liquide étant atteinte à une goutte ou une fraction de goutte près, et l'obturateur étant placé en position d'obturation du passage interne de la conduite, des chocs ou impulsions, transmis par le moyen d'impulsion 9 directement ou indirectement à la colonne de liquide comprise entre l'élément d'obturation 8 et l'ajutage 5, permettent d'expulser des micro-quantités du liquide contenu dans cette colonne. En fonction de la viscosité du liquide, de la taille de l'ajutage de délivrance 5, et de l'énergie de l'impulsion, la quantité délivrée grâce à ces chocs peut être déterminée précisément, et de manière répétable, par étalonnage. Ainsi, la quantité requise peut être obtenue précisément.

Le réservoir 3 de liquide, l'élément d'obturation 8, le moyen d'impulsion 9, l'élément indicateur 7 et le récipient 6 sont portés par des supports appropriés

Le réservoir 3 de stockage de liquide, d'un type connu peut être situé à distance de l'élément obturateur ou bien à proximité de ce dernier. Ce réservoir sera pourvu d'un couvercle d'obturation et de protection du volume interne qu'il détermine. Ce réservoir pourra être placé selon un niveau de hauteur supérieur par rapport à celui de l'élément obturateur 8 pour permettre un écoulement gravitaire du liquide ou bien à un niveau inférieur en association à un moyen pour propulser le liquide vers l'élément d'obturation 8. Ce moyen pourra être constitué par un volume de gaz comprimé introduit dans la partie supérieure du réservoir pour exercer une poussée sur le liquide contenu. Dans ce cas de figure, le couvercle assurera une fermeture parfaitement étanche et sera pourvu d'un perçage traversant dans lequel sera fixé un embout de raccordement d'une conduite connectée à une source de gaz sous pression. Ce gaz sera choisi de façon qu'aucune réaction chimique ne puisse se produire avec le liquide contenu dans le réservoir.

L'élément indicateur 7, selon la forme préférée de réalisation, est du type de ceux aptes à délivrer un signal représentatif d'une valeur pondérale. L'élément indicateur sera ou comprendra un capteur de poids placé sous le réservoir pour donner un signal représentatif de la valeur pondérale du récipient et de la quantité de liquide contenu dans ce dernier. Judicieusement, le signal délivré sera un signal électrique du type analogique ou du type binaire pour faciliter le traitement de ce dernier par une unité de commande et de contrôle 10 pouvant être associée au dispositif distributeur 1, 2 pour en commander et contrôler le fonctionnement suivant les instructions d'un programme préétabli selon les exigences de l'utilisateur. L'élément indicateur 7, dans la forme préférée de réalisation, est une balance de précision apte à produire le signal sus évoqué et le délivrer à l'unité de commande et de contrôle 10 à laquelle elle est connectée par une ligne électrique appropriée. Cette balance de précision pourra être pourvue d'un élément d'affichage, sous une forme compréhensible par l'utilisateur, de la valeur pondérale du liquide introduit dans le récipient. Cette balance sera pourvue d'un plateau horizontal sur lequel sera posé le récipient en vue de la mesure du poids de liquide que ce dernier contient.

En variante, l'élément indicateur sera du type de ceux aptes à délivrer directement un signal représentatif de la hauteur de liquide dans le récipient convertible ensuite par l'unité 10 en valeur pondérale ou en valeur volumique.

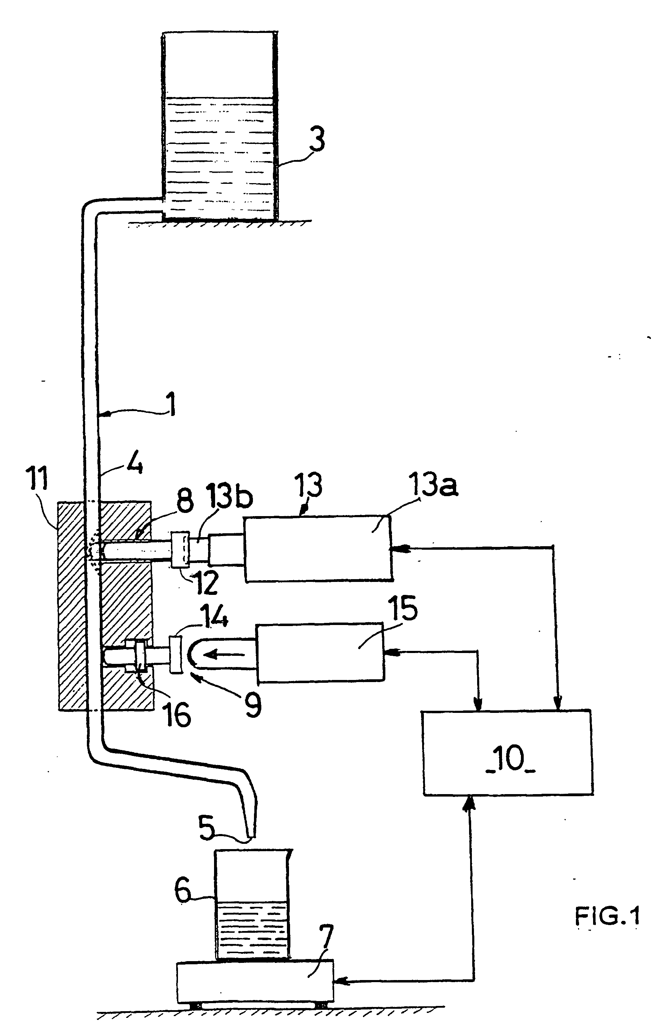

En figure 1 est représenté un dispositif distributeur selon une première forme de réalisation.

Ce dispositif comprend un corps rigide 11, de forme parallélépipédique, fixé à un support approprié. Ce corps comprend, entre ses deux faces horizontales supérieure et inférieure, un premier perçage traversant, vertical, de diamètre égal ou légèrement supérieur à celui de la conduite. La conduite 4 est engagée dans ce perçage et ce dernier ne couvre de préférence qu'une partie de la longueur de cette dernière. Le corps rigide 11 est de préférence situé à distance des deux extrémités de la conduite. La paroi de la partie de conduite située dans le premier perçage est élastiquement déformable. Pour des raisons de simplification de réalisation, l'ensemble de la conduite 4 est réalisé en un matériau élastiquement déformable mais on pourra prévoir une conduite en trois tronçons aboutés de manière étanche. Les deux tronçons latéraux pourront être réalisés en matériau rigide, par exemple en métal tandis que le tronçon intermédiaire, c'est à dire celui destiné à être logé dans le premier perçage, pourra être réalisé en matériau élastiquement déformable.

Ainsi la partie de conduite logée dans le perçage vertical, sous l'effet d'efforts externes peut donc se déformer sur elle-même de manière non permanente, cette déformation s'effectuant à l'encontre des forces élastiques internes dues à l'élasticité naturelle de la matière constitutive de sa paroi. Lorsque ces efforts disparaissent la conduite peut reprendre sa forme initiale grâce à ces forces élastiques internes. La pression dynamique du liquide s'exerçant sur la face interne de la conduite contribue aussi à redonner à la conduite sa forme initiale.

Selon la forme préférée de réalisation, la matière utilisée pour la réalisation de la conduite 4 est à base de tétrafluoroéthylène comme celle connue sous le nom commercial de « TEFLON », en raison de la résistance d'une telle matière aux agents chimiques et à la corrosion.

Perpendiculairement au premier perçage et de manière sécante à ce dernier, le corps en partie inférieure comporte un deuxième perçage et en partie supérieure un troisième perçage. Ces deuxième et troisième perçages horizontaux, débouchent d'une part dans le premier perçage et d'autre part sur une même petite face latérale verticale du corps. Dans le perçage supérieur est engagé l'élément d'obturation tandis que dans le perçage inférieur est disposé le moyen d'impulsion.

L'élément d'obturation comprend une tige 12 montée au moins par sa partie antérieure dans le troisième perçage. Cette tige, en position d'obturation, vient par l'extrémité libre de sa partie antérieure, pincer la conduite souple et aplatir sur elle-même la paroi de cette conduite ce qui conduit à obturer le passage interne du liquide. L'extrémité de la partie antérieure de la tige 12 est arrondie pour éviter de détériorer la conduite. Dans la forme préférée de réalisation au moins la partie antérieure de la tige est filetée et le perçage supérieur, suivant toute sa longueur, est taraudé pour recevoir en vissage la partie antérieure filetée de la tige 12. La partie postérieure de la tige 12, externe au corps rigide 11, est pourvue d'une tête 13 par la manoeuvre de laquelle il est possible d'ajuster le degré d'enfoncement de l'extrémité libre de la partie postérieure de la tige 12 dans la conduite 4. Ainsi par cette disposition, entre une position de pleine ouverture selon laquelle la conduite 4 n'est pas déformée par la tige et une position de fermeture totale selon laquelle la paroi de la conduite est aplatie sur elle-même par la tige, il est possible d'amener et de maintenir l'extrémité libre de la partie antérieure de la tige 12 en position intermédiaire selon le degré d'étranglement voulu et donc selon le débit de liquide à obtenir.

Au niveau de l'élément d'obturation, l'ouverture progressive de la section interne du passage, par dévissage de la tige 12, permet de faire varier le débit de manière progressive, depuis un goutte-à-goutte très lent jusqu'au débit maximum, qui dépend de la section de la conduite et de celle de l'ajutage 5, de la viscosité du liquide, et de la différence de hauteur entre le niveau de liquide dans le réservoir et l'ajutage de sortie ou bien de la valeur de la surpression dans le réservoir, dans le cas où ce dernier reçoit un gaz comprimé pour propulser le liquide.

La tête, qui forme un renflement annulaire sur la tige, permet la manoeuvre manuelle aisée de cette dernière. Par ailleurs la tête de la tige peut constituer une butée à la progression de la tige dans la conduite en venant, en position de fermeture totale, contre le corps rigide 11. Ainsi dans cette position, la tige ne pourra pénétrer plus avant dans la paroi de la conduite ce qui écartera les risques de perforation de cette dernière.

Selon la forme préférée d'exécution, l'élément d'obturation comprend également un mécanisme 13 pour un actionnement automatisé de ladite tige 12. Ce mécanisme 13 est externe au corps rigide 11 et comprend un organe moteur 13a, par exemple un moteur électrique pas à pas, à l'arbre de sortie duquel est accouplé un embout mâle d'entraînement 13b coopérant en relation d'emboîtement de forme et de transmission de couple et de mouvement de rotation avec une empreinte pratiquée en creux en extrémité libre de la partie postérieure de la tige 12 dans l'axe de cette dernière. L'organe moteur 13a sera piloté par l'unité de contrôle et de commande 10 et à cet effet, sera connecté par une ligne électrique appropriée à ladite unité.

Comme dit précédemment le perçage horizontal inférieur reçoit le moyen d'impulsion 9. Ce moyen d'impulsion comprend un poussoir 14 monté en coulissement dans le perçage inférieur pour pouvoir agir en poussée radialement sur la conduite et communiquer par ce biais une impulsion mécanique à la colonne de liquide. Le moyen d'impulsion comprend de plus extérieurement au corps rigide 11 un mécanisme d'actionnement 15 apte à mobiliser le poussoir 14 selon un mouvement bref de translation vers la conduite 4. Le poussoir 14 par sa partie antérieure est monté dans le perçage inférieur et par sa partie postérieure vient en dehors du corps rigide 11. L'extrémité libre de la partie antérieure est arrondie de façon à écarter tout risque de perforation de la conduite sous l'effet des impulsions reçues. De plus l'amplitude de la course du poussoir est limitée à une valeur inférieure au diamètre du passage interne de la conduite de façon que le poussoir ne puisse écraser la conduite 4 ; cette valeur pourra aussi être inférieure à celle du rayon dudit passage.

Pour limiter l'amplitude de sa course, le poussoir 14 comporte, entre sa partie antérieure et sa partie postérieure, une forme de collet 16 constituant butée et est engagé par cette forme de collet dans un lamage formé dans la partie postérieure du perçage. La forme de collet 16, en venant buter contre le fond lamage, limite le mouvement d'enfoncement du poussoir dans la conduite 4.

Il y a lieu de noter que les forces élastiques internes de la partie de conduite logée dans le perçage vertical sont suffisamment importantes pour repousser le poussoir 14 vers sa position initiale lorsque l'impulsion a cessé. Cependant, le cas échéant, un organe élastique de rappel, sous forme d'un ressort à spires non jointives, pourra être disposé en tension entre la forme de collet et le fond du lamage.

Dans la forme préférée de réalisation, le mécanisme d'actionnement 15 est constitué par un organe moteur du type vérin pneumatique ou hydraulique, disposé par sa tige en regard du poussoir 14 dans l'alignement axial de ce dernier. Ce vérin, simple ou double effet, est raccordé à une source de fluide sous pression (air ou huile selon le type de vérin) par l'intermédiaire d'une électrovanne pilotée par l'unité de commande et de contrôle 10 A cet effet cette électrovanne est connectée à l'unité 10 par une ligne électrique appropriée. Ce vérin 15 est monté sur un support approprié Par l'extrémité de sa tige, ce vérin lorsqu'il est actionné dans le sens du mouvement de sortie de la tige, vient communiquer au poussoir une impulsion mécanique axiale, sous l'effet de laquelle ledit poussoir peut se déplacer en coulissement dans le perçage inférieur et venir agir en poussée radiale sur la conduite. Immédiatement après le vérin est actionné dans le sens de la rétraction de sa tige. La tige du vérin peut être fixée au poussoir par un manchon ou une articulation mais de préférence ces deux éléments ne sont pas liés l'un à l'autre.

En variante, le mécanisme d'actionnement peut être constitué par une came sous forme d'un excentrique, et par un organe moteur possédant un arbre de sortie rotatif auquel est accouplé la camé. Ce moteur, qui peut être un moteur électrique pas à pas, sera positionné sur un support adapté de sorte que son arbre de sortie soit vertical et que la came sous forme d'excentrique soit positionnée en regard de l'extrémité libre de la partie postérieure du poussoir 14. La came se présentera sous la forme d'un disque circulaire épais, pourvu suivant son épaisseur d'un perçage traversant, excentré, par lequel elle sera montée en fixation sur l'arbre de sortie du moteur. Par sa surface cylindrique, au cours de sa rotation, la came viendra agir en poussée sur le poussoir 14. L'organe moteur sera piloté par l'unité de commande et de contrôle 10 et sera connecté à cette dernière par une ligne électrique appropriée.

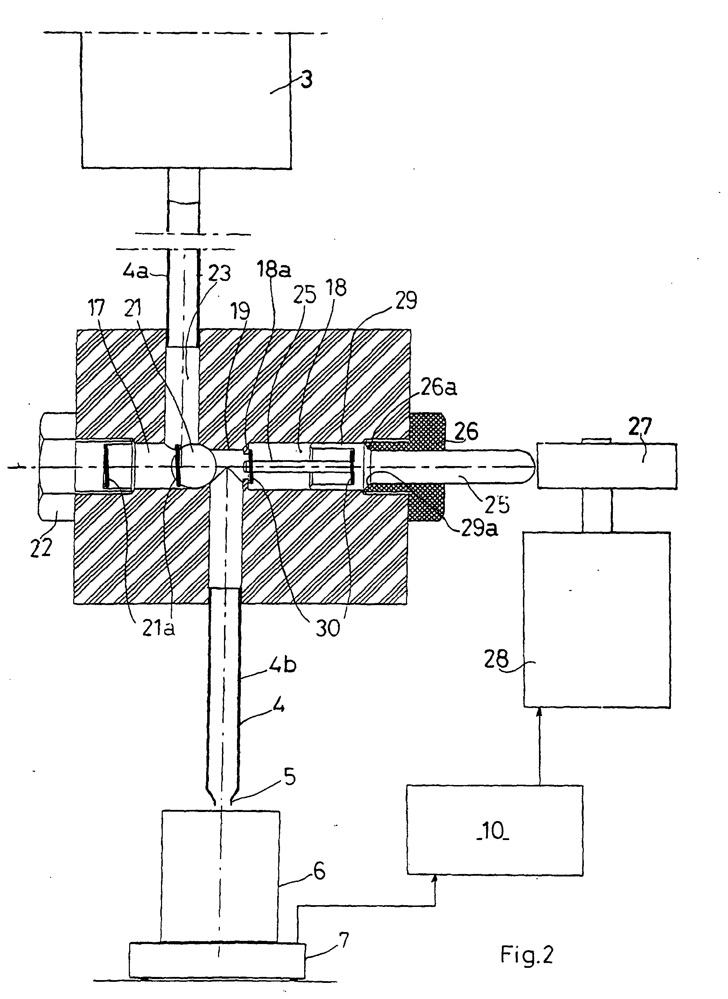

En figure 2 est représenté un dispositif distributeur 2 selon une seconde forme de réalisation.

Selon cette forme de réalisation, la conduite 4 comprend une section amont 4a raccordée au réservoir de stockage 3 et une section aval 4b en extrémité libre de laquelle est formée l'ajutage 5 de distribution et l'élément d'obturation 8 est constitué par une vanne du type normalement fermé à laquelle est raccordée d'une part la section amont 4a de conduite et d'autre part la section aval 4b de conduite.

L'élément d'obturation comprend un corps de vanne de forme parallélépipédique, en une matière peut sensible à la corrosion et susceptible de résister aux agents chimiques. Pourra être utilisé un acier inoxydable ou de préférence une matière synthétique à base de tétrafluoroéthylène comme celle connue sous le nom commercial de « TEFLON ».

Dans le corps de vanne est formé un logement horizontal cylindrique traversant. comprenant une partie amont 17 et une partie aval 18 en communication l'une avec l'autre par une partie médiane 19 de forme cylindrique à l'embouchure de laquelle, dans la partie amont 17 du logement est formé un siège 20 de soupape. La partie amont du logement est obturée de manière étanche par un bouchon 22. Ce bouchon comprend une tête prolongée axialement par une partie cylindrique filetée engagée en vissage dans un taraudage formé dans la partie cylindrique amont 17 du logement. Par la tête, le bouchon est amené en pression contre la face latérale correspondante du corps de vanne.

Contre le siège 20 de soupape prend appui en position d'obturation une soupape 21 montée mobile dans la partie amont 17 du logement cylindrique. Avantageusement la soupape est constituée par une bille en acier inoxydable présentant un polissage de surface. Cette bille présente un diamètre légèrement inférieur au diamètre de la partie amont 17 du logement pour pouvoir coulisser librement dans ce dernier tout en y étant parfaitement guidée. A la soupape 21 est associé un organe élastique de rappel 21a assurant son maintien contre le siège 20 en position d'obturation de la vanne. Cet organe élastique de rappel 21a est constitué par un ressort à spires non jointives, monté dans la partie amont 17, en tension entre la bille 21 et le bouchon 22 d'obturation.

La partie amont 17, par un perçage 23 pratiqué dans le corps de vanne perpendiculairement au perçage traversant, est en relation avec la section amont 4a de la conduite, cette dernière étant engagée avec force dans ledit perçage 23 tandis que la section aval 4b de la conduite est quant à elle en relation avec la partie médiane 19 du logement par l'intermédiaire d'un second perçage 24 pratiqué dans le corps de vanne, de manière perpendiculaire au perçage traversant. La section aval de la conduite sera engagée en force dans le perçage 4b.

L'embouchure du perçage 23, dans la partie amont 17, est positionnée en sorte de n'être obturée qu'en partie par la bille lorsque cette dernière est en appui sur son siège. De par cette disposition, la pression du liquide dans la partie amont 17, lorsque la vanne est en position d'obturation, assure en combinaison avec le ressort 21a, le maintien de la bille contre son siège. En outre cette disposition assure la communication du perçage 23 avec la partie médiane 19 du logement et ce dès que la bille 21 est décollée de son siège 20.

Le corps de vanne, selon un axe normal au siège de soupape, dans l'axe du perçage traversant, est pourvu d'un perçage traversant, débouchant dans la partie aval du logement, dans lequel est engagée en coulissement une tige cylindrique 25 d'actionnement de la soupape 21. Selon la forme préférée de réalisation, ce perçage traversant est formé dans un bouchon d'obturation 26 engagé en vissage par une partie cylindrique filetée qu'il comporte, dans un taraudage pratiqué dans la partie aval 18 du logement. Ce bouchon d'obturation 26 comporte une tête par laquelle il est amené en pression contre la face latérale correspondante du corps de vanne. Des joints d'étanchéité de forme torique seront disposés autour de la tige, dans le perçage traversant du bouchon.

Extérieurement au corps de vanne, la tige 25 coopère avec un mécanisme d'actionnement constitué par exemple par une came 27 sous forme d'excentrique et par un organe moteur 28 d'entraînement de la came, possédant un arbre de sortie rotatif sur lequel est calée ladite came 27. Le moteur 28, qui peut être un moteur électrique pas à pas, est positionné sur un support adapté de sorte que son arbre de sortie soit vertical et que la came 27 soit positionnée en regard de l'extrémité libre de la partie postérieure de la tige 25. La came, dans le cas d'une confguration verticale de l'arbre de sortie du moteur, se présente sous la forme d'un disque circulaire épais, pourvu suivant son épaisseur, d'un perçage traversant excentré, par lequel elle est montée en fixation sur l'arbre de sortie du moteur 27. Par sa surface cylindrique, au cours de sa rotation, la came vient agir en poussée sur la tige 25 de façon à décoller la soupape de son siège à l'encontre de l'action exercée par l'organe élastique 21a. La forme de la came assure la progressivité de l'ouverture de la soupape et donc la variation progressive du débit de liquide et ce depuis un goutte-à-goutte très lent jusqu'au débit maximum. Par ailleurs en assurant le maintien de la came dans une position angulaire déterminée il est possible de régler la valeur du débit de liquide au travers de la vanne et de maintenir ce débit, constant

En variante, le moteur sera positionné en sorte que son arbre de sortie soit horizontal. Dans cette configuration, la came présentera une suface de came se développant de manière oblique par rapport à l'axe de rotation.

L'organe moteur sera piloté par l'unité de commande et de contrôle 10 et sera connecté à cette dernière par une ligne électrique appropriée.

Il y a lieu de noter que lors d'une coupure de courant, le ressort de rappel 21a est suffisamment puissant pour repousser l'ensemble constitué par la soupape, la tige 25 et la came et ramener la soupape contre son siège. Ainsi une coupure de l'alimentation de l'organe moteur se traduit par une fermeture de la vanne.

A ce dispositif est associé un moyen d'aspiration pour ramener par aspiration dans la partie aval de conduite 4b les gouttes de liquide présente au niveau de l'ajutage de distribution 5 et ce notamment avant application des impulsions sur la colonne de liquide. Selon la forme préférée de réalisation, ce moyen d'aspiration est constitué par un piston 29 formé autour de la tige d'actionnement 25 et fixé à cette dernière. Ce piston est monté en coulissement dans la partie aval 18, cette partie 18 étant alésée. Dans cette forme de réalisation, la tige d'actionnement 25 n'est pas fixée à la soupape et il est prévu un organe élastique 30 pour ramener, dès que la soupape a rejoint son siège, la tige et le piston vers une position de repos c'est-à-dire la position la plus éloignée du siège de la soupape. Selon cette position, la tige 25 est écartée de la soupape. En position de repos, le piston 29, par une portée conique 29a qu'il présente en partie arrière, vient en appui contre un siège conique 26a ménagée dans le bouchon 26 autour du perçage traversant. Cette disposition favorise l'étanchéité de l'ensemble. L'organe élastique 30 est monté dans la partie aval (18) du logement, en tension entre le piston (29) et un épaulement (19a) formé entre ladite partie (18) et la partie médiane (19).
Le mouvement de retour de la tige et du piston s'effectue progressivement lors du retour de la came vers une position angulaire d'origine selon laquelle elle n'agit plus sur la tige 25. Lors de ce mouvement de retour vers la position de repos, la soupape étant en appui sur son siège, le volume du capsulisme formé en avant du piston s'accroît progressivement et le liquide contenu dans la section de conduite 4b est aspiré vers la partie 19 du logement et vers la partie aval 18. Ainsi les gouttes de liquides présentes au niveau de l'ajutage 5 sont ramenées dans la section de conduite 4b.

Dans cette forme de réalisation, le piston 29 et le mécanisme d'actionnement de la tige 25 de soupape constituent le moyen d'impulsion 9. Il y a lieu de noter que la valeur de l'amplitude maximale du mouvement de la tige, lorsque les impulsions sont communiquées par le piston à la colonne de liquide présente dans la section de conduite 4b, est inférieure à la valeur de l'écart entre ladite tige et la soupape 21, mesuré lorsque la soupape est en appui sur son siège et la tige en position de repos. Ainsi lors de l'application des impulsions sur la colonne de liquide, la tige ne pourra venir au contact de la soupape 21 ce qui écarte les risques d'ouverture inopinée de la vanne lors du micro-dosage.

Il y a lieu de noter que le dispositif tel que décrit présente deux zones à savoir une zone de pression élevée concernant la section 4a de conduite, le perçage 23 et la partie amont 17 du logement et une zone de pression plus basse concernant la section de conduite 4b, la partie médiane 19 du logement et la partie aval 18 de ce dernier. Il y a lieu de noter également que l'étanchéité de l'ensemble est principalement assurée dans la zone de pression la plus basse ce qui est un avantage notable pour la fiabilité de ce dispositif.

Le réservoir 3 de ce dispositif peut être placé à distance du corps de vanne ou bien à proximité immédiate de ce dernier pour réduire la longueur de la section de conduite et donc l'importance des volumes de stockage. Cette disposition est applicable notamment lorsque le liquide est coûteux et/ou lorsqu'il doit être distribué en très faible quantité. Le réservoir 3 par son embout pourra aussi être directement emmanché dans le perçage 23.

Le dispositif distributeur 2 tel qu'il vient d'être décrit peut être utilisé dans un grand nombre d'applications allant du micro-dosage de laboratoire au dosage de très grosses quantités de liquide. Pour des applications de production, la taille de section 4a, 4b de la conduite pourra sans difficulté atteindre des diamètres de 50 mm, voire plus. La taille de la vanne sera naturellement proportionnelle à la taille de la conduite.

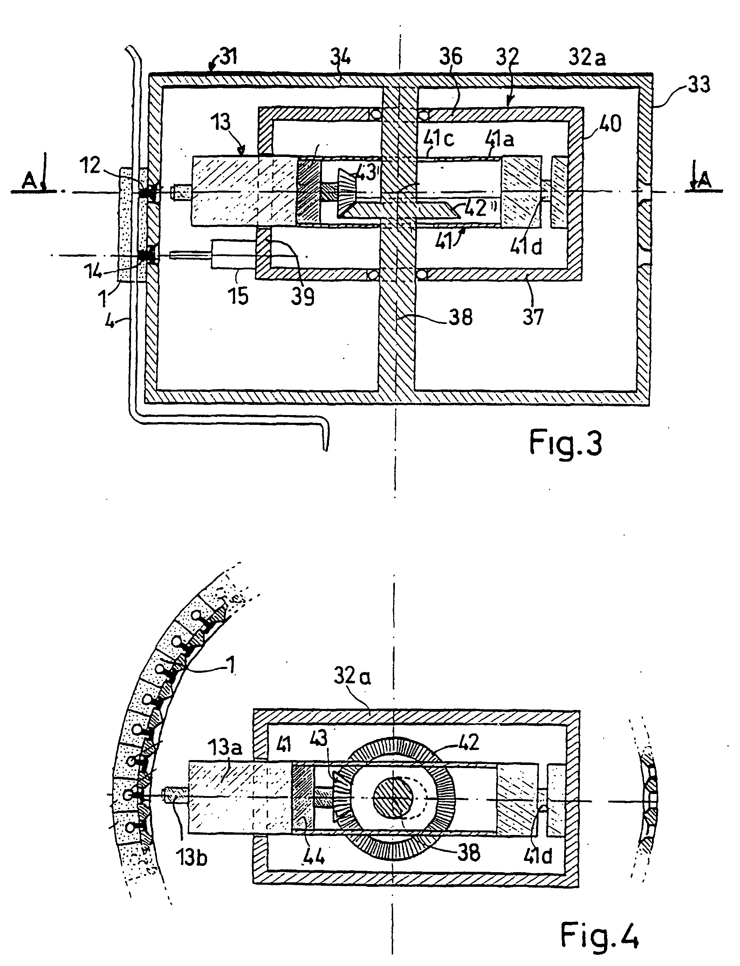

En figures 3 à 7 sont représentées diverses formes de réalisation d'une installation pourvue d'au moins un dispositif distributeur 1, 2 tel qu'il vient d'être précédemment décrit. Cette installation est destinée à délivrer de façon automatique des quantités précises d'un ou plusieurs liquides à un ou plusieurs récipient(s) 6 afin de former par exemple des mélanges de différents produits liquides.

L'installation comporte un premier ensemble support 31 sur lequel sont montés plusieurs dispositifs distributeurs 1, 2 et un second ensemble support sur lequel est ou sont montés le ou les organes moteurs 13a, 15, 27, 28 des mécanismes d'actionnement. A cette installation sont associés au moins un récipient 6 de liquide(s), au moins un élément indicateur 7 de la quantité de liquide dans le récipient 3 lequel est apte à émettre un signal représentatif de cette quantité vers l'unité de calcul et de commande 10, programmable apte à commander et contrôler selon les données de son programme, le ou les organes moteurs du ou des mécanismes d'actionnement de l'élément obturateur et du moyen d'impulsion de chaque dispositif distributeur.

Selon une première forme de réalisation, les ensembles support 31, 32 sont mobiles l'un par rapport à l'autre et l'un au moins des deux ensembles support est mobilisé par rapport à l'autre par un organe moteur commandé par l'unité de calcul et de commande 10 afin que soient positionnés en vis-à-vis les uns des autres le ou les organes moteurs des mécanismes d'actionnement et la ou les tiges d'actionnement du dispositif distributeur sélectionné.

Toujours selon la forme préférée de réalisation les dispositifs distributeurs 1, 2 sont disposés sur le premier ensemble support 31 à intervalle constant selon une circonférence de cercle et de manière radiale par rapport à cette demière de façon à former une couronne. En variante, ces dispositifs pourront être disposés à intervalle constant selon une ligne droite ou bien selon une courbe si les contraintes géométriques de lieu d'implantation de l'installation imposent une telle configuration Avec une configuration en ligne droite le second ensemble support sera mobile et sera constitué par un chariot déplaçable tant en hauteur que parallèlement à l'alignement formé par dispositifs distributeurs. Les mouvements de ce chariot par rapport aux dispositifs distributeurs, ainsi que son positionnement en regard du distributeur sélectionné seront pilotés et contrôlés par l'unité de contrôle et de commande 10.

Les dispositifs distributeurs pourront aussi être disposés à intervalle non constant les uns des autres.

Dans les formes de réalisation représentées en figures 3 à 5, le second ensemble support 32 est disposé dans le premier et la ou les tiges 12, 14, 25 du ou des mécanisme(s) d'actionnement de chaque élément distributeur 1, 2 est ou sont horizontale(s) et radiale(s) à la couronne formée par les dispositifs distributeurs.

De préférence le premier ensemble support 31 est fixe et le second est mobilisé par l'organe moteur. On pourra cependant prévoir une disposition inverse à savoir un second ensemble support fixe et un premier ensemble support mobile et actionné par l'organe moteur.

En figures 3 et 4 est représentée une installation équipée de dispositif distributeur 1 selon la première forme de réalisation.
Le premier ensemble support 31 est constitué par une paroi sans fin 33, déterminant un volume cylindrique dans lequel est logé le second ensemble support 32. Cette paroi sans fin reçoit une paroi supérieure 34 sous forme de disque circulaire et une paroi 35 inférieure également sous forme de disque circulaire. Ces parois supérieure et inférieure obturent en partie supérieure et en partie inférieure le volume cylindrique que délimite la paroi sans fin 33. L'enceinte formée par ces parois 33, 34 et 35 est supportée par un piétement approprié, non représenté. A la face cylindrique externe de la paroi sans fin 33 est fixé par tout moyen connu de l'homme de l'art, le corps rigide 11 de chaque dispositif distributeur 1 équipant l'installation. Au niveau de chaque dispositif distributeur 1 la paroi sans fin 33 est équipée de deux perçages traversants radiaux. Dans un de ces perçages est engagée la tige 12 de l'élément d'obturation 8 et dans l'autre le poussoir 14 du moyen d'impulsion 9.

Le second ensemble support 32 comprend une enceinte 32a formant un caisson parallétépipédique, pourvue d'une paroi supérieure horizontale 36 et d'une paroi inférieure horizontale 37 dotées chacune selon un axe vertical commun d'un perçage traversant dans lequel est monté un palier de guidage en rotation sur un arbre vertical 38 solidaire du premier ensemble support 31 et plus précisément des parois 33 et 34 de ce dernier. Ce caisson est disposé de manière centrée par rapport à la couronne formée par les dispositifs distributeurs 1. Les deux parois supérieure et inférieure 37, 38 sont jointes l'une à l'autre par au moins deux parois latérales 39, 40, diamétralement opposées, normales à un même axe sécant et perpendiculaire à l'axe longitudinal de l'arbre de guidage 38. La première de ces parois, la paroi 39, selon un axe horizontal radial à l'arbre de guidage 38 et radial au premier ensemble 31, est dotée d'un perçage traversant dans lequel est engagée une bague pourvue d'un alésage traversant de section droite polygonale et se développant selon un axe horizontal radial à l'arbre de guidage et radial à la couronne formée par les dispositifs distributeur. Dans cet alésage est engagée une forme de fourreau 41, parallélépipédique, constituant un carter dont les parois supérieure 41a et inférieure 41b sont pourvues chacune en vis-à-vis l'une de l'autre d'une lumière traversante 41c de passage de l'arbre vertical de guidage 38. Cet arbre reçoit en fixation, dans la forme de fourreau 41, une couronne dentée 42 fixe avec laquelle est destiné à coopérer en engrènement un pignon denté 43 calé sur l'arbre de sortie horizontal d'un organe moteur d'entraînement en rotation du second ensemble support 32 autour de l'arbre de guidage 38. Cet organe moteur est solidaire de la forme de fourreau et est fixé à l'avant de cette demiére par tout moyen connu de l'homme de l'art. Cet organe moteur est constitué par exemple par un moteur électrique pas à pas piloté par l'unité de commande et de contrôle 10. Avantageusement, cet organe moteur est constitué par l'organe moteur 13a du mécanisme d'actionnement 13. A cet effet ce moteur comporte un arbre traversant pour recevoir selon l'une de ses extrémités le pignon 43 et selon l'autre extrémité, extérieurement à l'enceinte, et en regard des dispositifs distributeurs l'embout d'accouplement 13b à la tige 12.

La forme de fourreau 41 porte extérieurement à l'enceinte 32a et en regard des dispositifs distributeur, l'organe moteur 13a avec embout 13b d'actionnement de l'élément d'obturation 8 tandis que l'enceinte 32a sous l'organe d'actionnement sus-cité, porte l'organe moteur 15 du mécanisme d'actionnement du moyen d'impulsion 9.

L'organe moteur 13a d'entraînement en rotation du second ensemble support est piloté par l'unité 10 en sorte de déplacer les mécanismes d'actionnement vers le dispositif distributeur choisi et les immobiliser temporairement dans l'axe des tige 12 et poussoir 14. Avantageusement à l'axe traversant de l'organe moteur 13a est associé un codeur d'un type connu, connecté par une ligne électrique appropriée à l'unité de contrôle et de commande pour délivrer à cette demière un signal représentatif de la position angulaire du second ensemble dans le premier.

La forme de fourreau 41 est montée en coulissement dans l'alésage traversant de la bague, et les lumières 41c, traversantes, pratiquées dans les parois inférieure et supérieure de la forme de fourreau 41 sont de forme oblongue et orientées de sorte que leur axe longitudinal se développe de manière radiale et sécante à l'axe longitudinal de symétrie de l'arbre de guidage 38. En outre à la paroi arrière de la forme de fourreau et à la paroi de l'enceinte 32a est fixé un organe d'actionnement 41d, du genre vérin, sous l'action duquel la forme de fourreau 41 est déplacée dans l'alésage de la bague soit vers le dispositif distributeur 2 sélectionné de sorte que l'embout d'accouplement 13b que porte l'organe moteur 13a soit accouplé à la tige 12 de l'élément obturateur 8 et le pignon 43 soit désaccouplé de la couronne 42, soit en sens inverse afin que l'embout de d'accouplement 13b soit désaccouplé de la tige 12 de l'élément obturateur 8 et le pignon 43 accouplé à la couronne dentée 42.

Toujours selon cette forme de réalisation, le récipient 6 et l'élément indicateur 7 de la quantité de liquide dans ledit récipient sont fixes par rapport au premier ensemble support 31 et occupent une position inférieure et coaxiale par rapport à la couronne que forme les dispositifs distributeurs 1. Les conduites de ces dispositifs en partie inférieure sont coudées de façon à venir se situer par leur ajutage de délivrance 5 au-dessus du récipient 6. Il y a lieu de noter que les conduites par leur partie inférieure sont d'égales dimensions et coudées selon le même angle. Cette caractéristique permet d'améliorer la répétabilité des résultats des dosages

L'installation telle que décrite peut aussi utiliser des dispositifs distributeurs 2 selon la seconde forme de réalisation.

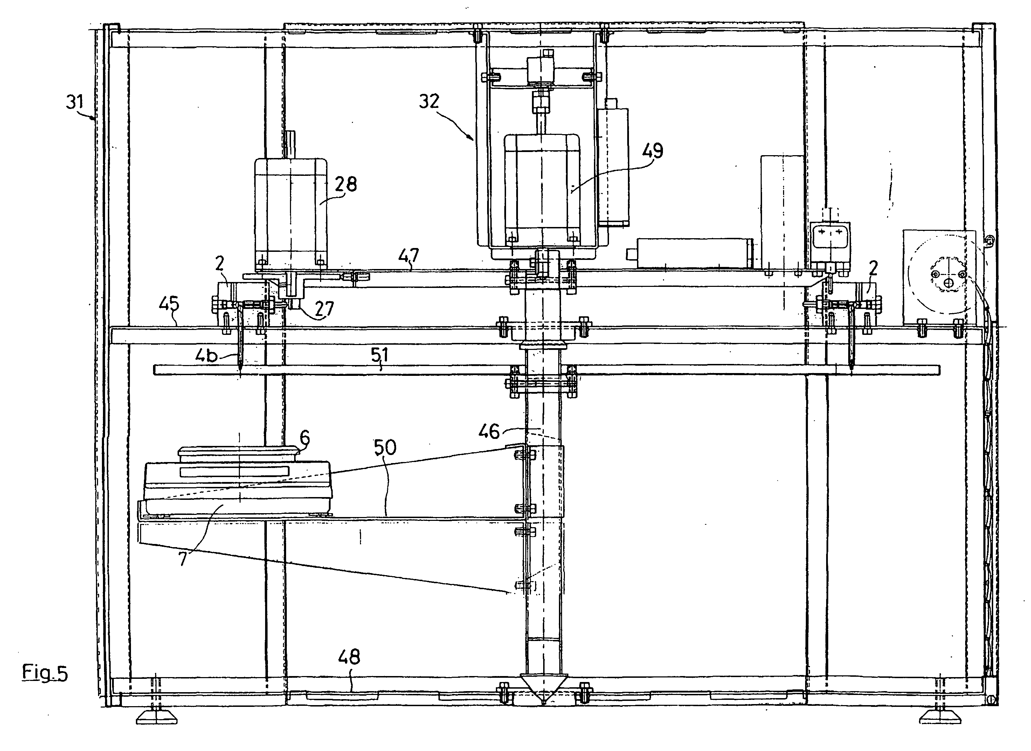

En figure 5 est représentée une installation équipée de dispositifs distributeurs 2 selon la seconde forme de réalisation.

Le premier ensemble support 31 comprend une platine horizontale 45 portée par et dans une structure tridimensionnelle formée par assemblage de montants et de traverses disposés selon les arêtes d'un parallélépipède rectangle. Cette structure reçoit des parois fixes de couverture définissant un volume parallélépipédique dans lequel est disposé le second ensemble support. Ce volume est pourvu d'une ouverture d'accès à laquelle est associé un rideau mobile, d'obturation ou bien une trappe. La platine honzontale 45 reçoit en fixation le corps de vanne de chaque dispositif distributeur 2 équipant l'installation. Comme indiqué précédemment, les corps de vanne sont disposés à intervalle régulier les uns des autres selon la circonférence de cercle de façon à former une couronne circulaire et sont orientés en sorte que leur tige d'actionnement 25 soit radiale à la couronne formée et soit orientée vers le centre de cette dernière et vers le second ensemble support 32.

Le second ensemble support 32 comprend un arbre vertical 46 auquel est fixé de manière radiale un bras support 47 portant à distance de l'arbre 46, l'organe moteur 28 avec came 27 du moyen d'impulsion 9 et d'actionnement de l'élément obturateur 8. Le bras s'étend de part et d'autre de l'arbre et porte à l'opposé de l'organe moteur 28, une masse d'équilibrage. L'arbre vertical 46 est engagé par son extrémité inférieure dans un palier de guidage en rotation, fixé à une platine inférieure 48 solidaire du premier élément support 31 et est accouplé par son extrémité supérieure à l'arbre de sortie vertical d'un organe moteur 49 d'entraînement en rotation, lequel est fixé par son carter à une monture solidaire du premier ensemble support. Cet organe moteur, constitué par exemple par un moteur électrique pas à pas est connecté par une ligne électrique appropriée à l'unité de contrôle et de commande 10 en sorte d'être piloté par cette dernière et positionner à la demande, le bras 47 et l'organe moteur 28 avec came 27 en regard du dispositif distributeur sélectionné pour la distribution dans le récipient 6, de la quantité requise de liquide. Pour immobiliser le bras 47 et l'arbre 46 le temps de la distribution de la quantité de liquide requise, le corps de chaque dispositif distributeur est doté d'un perçage borgne ouvert sur sa face supérieure horizontale et il est prévu un vérin pneumatique vertical porté par le bras du côté de sa masse d'équilibrage et destiné par sa tige lorsqu'il est activé à pénétrer dans le perçage borgne du corps du distributeur diamétralement opposé à celui sélectionné.

L'arbre 46 entre le bras support 47 et son extrémité supérieure est engagé dans un palier de guidage monté dans le perçage traversant de la platine horizontale 45 du premier ensemble support 31. L'arbre 46 est centré par rapport à la couronne que forme les corps de vanne des distributeurs lesquels sont orientés en sorte que leur tige 25 se développe de manière radiale à l'arbre 46 et soit tournée vers ce dernier.

La section aval de la conduite de chaque dispositif distributeur est engagée dans un perçage traversant de la platine support 45 pour venir se situer, par l'ajutage de distribution 5, au-dessus d'une seconde platine support horizontale 50 disposée sous la première et à écartement de cette dernière, cette seconde platine support étant fixée rigidement à l'arbre d'entraînement 46 de façon à être entraînée en rotation avec le bras support 47, le récipient 6 et l'élément 7 indicateur de la quantité de liquide dans le récipient étant installés sur la seconde platine. Le récipient par son ouverture est positionné sur cette platine en sorte d'être dans l'axe c'est à dire en dessous de l'ajutage de délivrance 5 du dispositif distributeur sélectionné pour la délivrance d'une quantité dosée du liquide contenu dans le réservoir associé à ce dispositif distributeur. Avantageusement la position de la platine 50 est ajustable le long de l'axe afin de pouvoir recevoir des récipients de différentes hauteurs.

De préférence, les sections de conduites 4b sont toutes rectilignes, verticales et d'égales longueurs. Ces dispositions permettent d'améliorer la répétabilité des résultats des dosages.

Entre la platine 50 et la platine 45, le second ensemble support est équipé d'un plateau de protection 51 horizontal fixé à l'arbre d'entraînement 46. Ce plateau présente un bord périphérique relevé et présente en saillie sur sa face supérieure un bossage. Ce bossage et le plateau sont traversés de part en part par un seul perçage vertical. Ce perçage, par rotation de l'arbre, est emmené dans l'axe de l'ajutage 5 du dispositif distributeur sélectionné et permet l'écoulement du liquide depuis l'ajutage 5 vers le récipient.

Ce plateau 51 à pour but de récupérer et retenir grâce à son bord relevé, les écoulements résiduels de liquide et d'éviter que ces derniers ne viennent contaminer la composition réalisée, ou bien en cours de réalisation et fausser le dosage.

De préférence, à l'arbre rotatif 46, est associé un codeur d'un type connu, connecté par une ligne électrique appropriée, à l'unité de contrôle et de commande pour délivrer à cette dernière un signal représentatif de la position angulaire du second ensemble dans le premier.

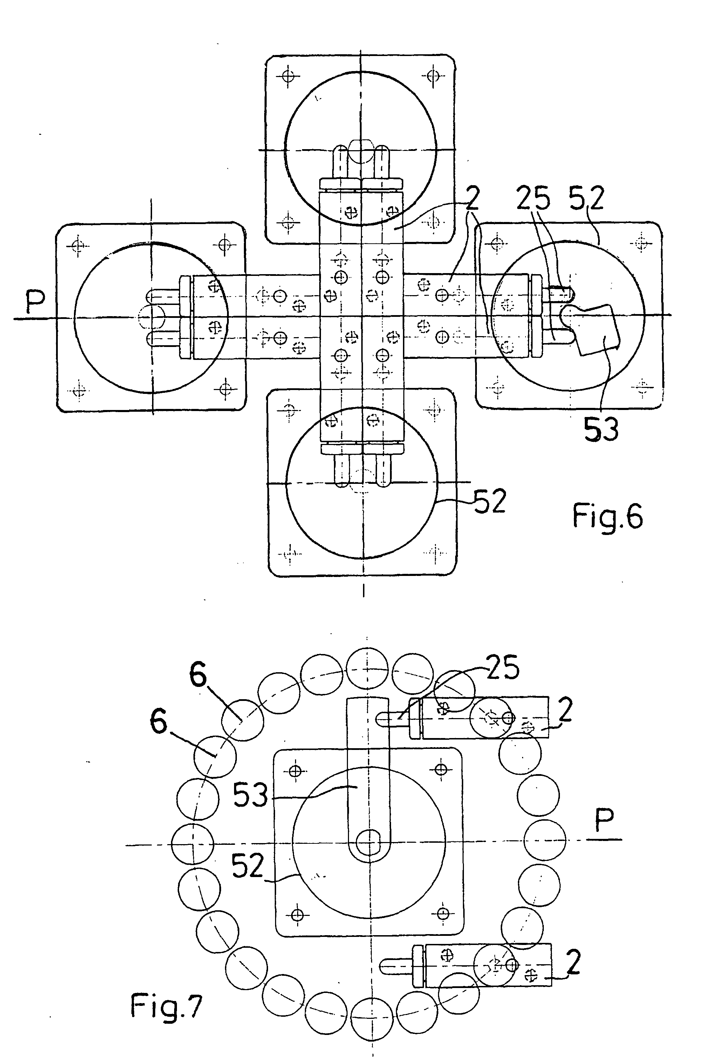

Selon une autre forme de réalisation de l'invention, comme on peut le voir en figure 6 et 7, les deux ensembles support 31, 32 sont fixes l'un par rapport à l'autre, et le premier ensemble support reçoit en fixation au moins un groupe de deux de dispositif distributeur 2, les deux dispositifs distributeurs du groupe étant disposés de manière parallèle et symétrique par rapport à un plan géométrique vertical P et étant orientés en sorte que leur tiges d'actionnement 25 soient tournées vers la même direction. A ce groupe de dispositifs distributeurs est associé un mécanisme d'actionnement qui lui est propre, fixé sur le second ensemble support et constitué d'un organe moteur 52 sur l'arbre de sortie duquel est calée une came 53. L'arbre de sortie de l'organe moteur 52 du mécanisme d'actionnement est disposé de manière verticale et l'axe géométrique de rotation de cet arbre de sortie est disposé dans le plan géométrique vertical de symétrie P. La came, calée en rotation et translation sur l'arbre de sortie, présente deux surfaces de came verticales disposées de manière symétrique par rapport à un plan vertical contenant l'axe de rotation de l'arbre du moteur, ladite came par l'une de ses surfaces de came étant destinée à être amenée par l'organe moteur en pression contre la tige d'actionnement du moyen d'impulsion et de la soupape de l'un des deux dispositifs ei par l'autre surface de came contre la tige de l'autre dispositif. En figure 6 on peut voir que l'installation comporte plusieurs groupes de dispositifs distributeurs et que les deux dispositifs distributeurs de chaque groupe sont disposés côte à côte. Dans ce cas de figure, les surfaces de cames sont disposées selon deux plans verticaux formant un angle entre eux. En figure 7 on peut remarquer que l'installation ne possède qu'un seul groupe de dispositifs distributeurs. Ces dispositifs distributeurs sont écartés l'un de l'autre et les surfaces de la came utilisée sont parallèle l'une à l'autre. Avec l'une ou l'autre forme de réalisation objet des figures 6 et 7, pourront être utilisés plusieurs récipients montés de manière amovible sur un support mobile mû par un organe moteur piloté par l'unité de commande et de contrôle afin d'amener les récipients sous les ajutages de délivrance des dispositifs distributeur. A ce support mobile par exempte en rotation sera associé un dispositif indicateur 7. Ces récipients mobiles pourront être des tubes d'essai, des éprouvettes et autres conteneurs dans lesquels plusieurs produits liquides sont successivement introduits.

En variante à chaque groupe de l'installation de la figure 6 seront associés un dispositif indicateur 7 et un récipient 6.

Il va de soi que la présente invention peut recevoir tous aménagements et variantes du domaine des équivalents techniques sans pour autant sortir du cadre défini par les revendications ci-jointes.

## Revendications

1. Procédé de distribution en quantités dosées d'un liquide contenu dans un réservoir de stockage (3), raccordé à une conduite de distribution (4) pourvue d'un ajutage (5) d'écoulement du liquide vers un récipient (6) associé à un élément indicateur (7), délivrant sous forme d'un signal une valeur représentative de la quantité de liquide présente dans le récipient (3) et la dite conduite (4) à distance de l'ajutage (5), étant associée à un élément d'obturation (8) lequel, à la commande, obture ou libère le passage du liquide au travers de la conduite (4), du réservoir (3) vers l'ajutage de distribution (5), le diamètre de l'ajutage de distribution (5) étant tel que la colonne de liquide, dans la portion de conduite entre l'ajutage (5) et l'élément d'obturation (8), lorsque ce dernier obture le passage du liquide, puisse y être immobilisée sous l'effet notamment des forces de tensions superficielles, **caractérisé en ce qu'**il consiste dans les étapes fonctionnelles suivantes données par ordre chronologique :
a) - libérer le passage de liquide entre le réservoir (3) et l'ajutage (5) par action sur l'élément d'obturation (8), de façon que le liquide puisse remplir la portion de conduite entre l'élément d'obturation (8) et l'ajutage de distribution (5),
b) - obturer le passage de liquide par action sur l'élément d'obturation (8), pour interrompre l'écoulement du liquide,
c) - appliquer sur la colonne de liquide située entre l'élément d'obturation (8) et l'ajutage de distribution (5), au moins une impulsion mécanique d'amplitude et/ou d'intensité calibrée, pour expulser de la colonne de liquide, au travers de l'ajutage de distribution (5), vers le récipient (3), une micro quantité de liquide,
d) - comparer la valeur donnée par l'élément indicateur (7) à une valeur de consigne C1 préétablie, représentative de la valeur de la dose à délivrer, une valeur de tolérance △C1 étant attachée à la valeur C1,
e) et répéter les étapes c) et d) tant que la valeur donnée par l'élément indicateur (7) n'est pas comprise dans la plage de tolérance attachée à la valeur de consigne C1.

2. Procédé de distribution d'un liquide en quantités dosées, selon la revendication 1, **caractérisé en ce que** lors de l'étape a) pendant laquelle le passage de liquide entre le réservoir (3) et l'ajutage (5) est libéré et du liquide est également déversé dans le récipient, la valeur donnée par l'élément indicateur (7) est comparée en continu à une valeur de consigne C0 inférieure à la valeur C1 et voisine de cette dernière, et que l'étape b) dudit procédé est engagée lorsque la valeur donnée par l'élément indicateur est égale à la valeur de la consigne C0, les étapes c), d), et e, étant ensuite successivement engagées.

3. Procédé de distribution d'un liquide en quantités dosées selon la revendication 1 ou la revendication 2 **caractérisé en ce que** les impulsions mécaniques, devant être communiquées à la colonne de liquide sont appliquées sur la conduite.

4. Procédé de distribution d'un liquide en quantités dosées selon la revendication 1 ou la revendication 2, **caractérisé en ce que** les impulsions mécaniques, devant être communiquées à la colonne de liquide, sont appliquées directement sur cette dernière.

5. Dispositif distributeur pour la délivrance en quantités dosées d'un liquide, **caractérisé en ce qu'**il comprend :
- un réservoir (3) de stockage contenant le liquide à distribuer,
- une conduite (4) de distribution raccordée au réservoir (3) et pourvue d'un ajutage d'écoulement (5) du liquide vers un récipient (6) associé à un élément indicateur (7) délivrant sous forme d'un signal une valeur représentative de la quantité de liquide présente dans le récipient (6),
- un élément d'obturation (8) associé à la conduite (4) et placé à distance de l'ajutage (5), obturant ou libérant à la commande le passage de liquide entre le réservoir (3) et l'ajutage (5), l'aire de la section de passage que détermine l'ajutage (5) étant telle que, lorsque l'élément obturateur (8) obture le passage, la colonne de liquide présente dans la portion de conduite entre l'ajutage (5) et l'élément d'obturation (8), se trouve immobilisée dans cette portion sous l'effet notamment des forces de tensions superficielles,
- un moyen d'impulsion (9) situé entre l'élément d'obturation (8) et l'ajutage de délivrance (5) du liquide, pour communiquer à la colonne de liquide située entre l'élément d'obturation et l'ajutage de distribution, au moins une impulsion mécanique calibrée sous l'effet de laquelle une micro quantité de liquide est expulsée de la colonne de liquide.

6. Dispositif selon la revendication 5, **caractérisé en ce que** qu'il comprend un corps rigide (11) comprenant un premier perçage traversant dans lequel est engagée la conduite (4), ce corps rigide, comprenant un second perçage débouchant d'une part dans le premier perçage traversant et d'autre part sur l'une de ses faces, ledit second perçage recevant le moyen d'impulsion (9).

7. Dispositif selon la revendication 5, **caractérisé, en ce que** la paroi de la conduite, au moins dans le premier perçage du corps rigide (11), est élastiquement déformable.

8. Dispositif selon la revendication 6 ou la revendication 7, **caractérisé, en ce que** le moyen d'impulsion (9) comprend un poussoir (14), mobile transversalement par rapport à la conduite (4), et monté en coulissement dans le second perçage pour pouvoir agir en poussée sur la conduite.

9. Dispositif selon la revendication 8, **caractérisé en ce que** moyen d'impulsion (9) comprend un mécanisme d'actionnement (15) apte à mobiliser le poussoir (14) selon un mouvement bref de translation vers la conduite (4).

10. Dispositif selon les revendications 8 et 9 prises ensembles, **caractérisé en ce que** le mécanisme d'actionnement (15) du poussoir est externe au corps rigide (11).

11. Dispositif selon la revendication 10, **caractérisé en ce que** le mécanisme d'actionnement (15) est constitué par un organe moteur du type vérin.

12. Dispositif selon l'une quelconque des revendications 7 à 11, **caractérisé en ce que** le corps rigide (11), en amont du second perçage, en considérant la direction d'écoulement du liquide dans la conduite (4), est pourvu d'un troisième perçage débouchant d'une part dans le premier perçage traversant et d'autre part sur l'une de ses faces externe, ledit troisième perçage recevant l'élément d'obturation (8).

13. Dispositif selon la revendication 12, **caractérisé en ce que** l'élément d'obturation (8) comprend une tige (12) montée, au moins par sa partie antérieure, dans le troisième perçage, et venant en position d'obturation, par l'extrémité libre de sa partie antérieure, pincer la conduite souple (4).

14. Dispositif selon la revendication 13, **caractérisé en ce que** l'élément d'obturation (8) comprend un mécanisme d'actionnement (13) de la tige (12).

15. Dispositif selon la revendication 14 **caractérisé en ce que** le mécanisme d'actionnement (13) de la tige (12) est externe au corps rigide (11).

16. Dispositif selon l'une quelconque des revendications 13 à 15, **caractérisé en ce que** la tige (12) est filetée et que le troisième perçage est taraudé pour recevoir ladite tige (12) en vissage ce qui permet d'ajuster le degré d'étranglement de la conduite (4) par la tige (12), donc la section du passage au niveau de l'élément d'obturation et par voie de conséquence le débit de l'écoulement de liquide.

17. Dispositif selon la revendication 16, **caractérisé en ce que** la tige (12), selon l'extrémité libre de sa partie postérieure, est dotée d'une empreinte avec laquelle coopère en relation d'emboîtement de forme et de transmission de couple et de mouvement de rotation un embout d'entraînement (13b), rotatif, motorisé, du mécanisme d'actionnement (13).

18. Dispositif selon la revendication 16 **caractérisé en ce que** le mécanisme d'actionnement de la tige (12) dé l'élément obturateur est équipé d'un organe moteur (13a) à l'arbre de sortie duquel est accouplé l'embout d'entraînement (13b).

19. Dispositif distributeur selon la revendication 5, **caractérisé en ce que** la conduite (4) comprend une section amont (4a) raccordée au réservoir de stockage (3) et une section aval (4b) en extrémité libre de laquelle est formée l'ajutage (5) de distribution et que l'élément d'obturation (8) est une vanne, du type normalement fermée à laquelle est raccordée d'une part la section amont (4a) de conduite et d'autre part la section aval (4b) de conduite, ladite vanne comprenant un corps de vanne dans lequel est formé un logement comprenant une partie amont (17) et une partie aval (18)en communication l'une avec l'autre par une partie médiane (19) de forme cylindrique, à l'embouchure de laquelle, dans la partie amont du logement, est formé un siège (20) de soupape, contre lequel prend appui en position d'obturation une soupape (21) montée mobile dans la partie amont (17) du logement, laquelle partie, par un perçage (23) pratiqué dans le corps de vanne, est en relation avec la section amont (4a) de conduite, la section aval (4b) de conduite étant quant à elle en relation avec la partie médiane (19) du logement par l'intermédiaire d'un second perçage (24) pratiqué dans le corps de vanne, ledit corps de vanne selon un axe normal au siège de soupape (20), étant pourvu d'un troisième perçage traversant, débouchant dans la partie aval (18) du logement, dans lequel perçage est engagée une tige d'actionnement (25) de la soupape (21), ladite tige (25) étant associée à un mécanisme d'actionnement (27, 28) et ladite vanne étant associée au moyen d'impulsion (9).

20. Dispositif selon la revendication 19, **caractérisé par** un moyen d'aspiration pour ramener par aspiration dans la section aval (4b) de conduite, les gouttes de liquide présentes au niveau de l'ajutage de distribution (5) et ce notamment avant application des impulsions sur la colonne de liquide.

21. Dispositif selon la revendication 20, **caractérisé en ce que** le moyen d'aspiration est constitué par un piston (29) monté dans un alésage pratiqué dans le corps de vanne, ledit alésage étant formé dans la partie aval (18) du logement et ledit piston (29) étant associé à un mécanisme d'actionnement.

22. Dispositif selon la revendication 21 **caractérisé en ce que** le piston (29) et le mécanisme d'actionnement constituent le moyen d'impulsion (9).

23. Dispositif selon les revendications 19 et 22 prises ensembles, **caractérisé en ce que** :
- le piston (29) est formé autour de la tige d'actionnement (25) de la soupape (21) et est fixé à ladite tige (25).
- le mécanisme d'actionnement du piston est le mécanisme d'actionnement de ladite tige,
- la tige (25) et la soupape (21) sont libres l'une par rapport à l'autre,
- et la dite tige (25) est mobilisée par son mécanisme d'actionnement (27, 28), depuis une position de repos selon laquelle elle est écartée de la soupape (21), vers l'une de ses positions d'actionnement selon lesquelles, en agissant en poussée sur la soupape (21) elle maintient cette dernière à écartement de son siège (20), la valeur de l'écartement entre la soupape (21) et le siège (20) et donc la valeur du débit de liquide, dépendant de la position d'actionnement atteinte par la tige d'actionnement (25).

24. Dispositif selon l'une quelconque des revendications 21 à 23, **caractérisé par** un organe élastique (30) monté dans la partie aval (18) du logement, en tension entre le piston (29) et un épaulement (19a) formé entre ladite partie (18) et la partie médiane (19).

25. Dispositif selon l'une quelconque des revendications 19 à 23, **caractérisé par** un organe élastique de rappel (21a), logé dans la partie amont (17) du logement, assurant le maintien de la soupape (21) contre son siège (20) en position d'obturation de la vanne.

26. Dispositif selon l'une quelconque des revendications 19 à 25, **caractérisé en ce que** la soupape (20) est constituée par une bille.

27. Dispositif selon l'une quelconque des revendications 19 à 26, **caractérisé en ce que** la matière constitutive de la soupape (21) présente une dureté supérieure à celle de la matière constitutive du siège de soupape (20).

28. Dispositif selon l'une quelconque des revendications 19 à 27, **caractérisé en ce que** le mécanisme d'actionnement du moyen d'impulsion (9) et d'actionnement de l'élément obturateur est constitué par une came (27) et par un organe moteur (28) d'entraînement de la came, ladite came (27) étant calée sur l'arbre de sortie rotatif de l'organe moteur (28).

29. Installation pour délivrer de façon automatique des quantités précises d'un ou plusieurs liquides à un ou plusieurs récipient(s) (6), **caractérisée en ce qu'**elle est équipée d'au moins un dispositif distributeur (1, 2) selon l'une quelconque des revendications 5 à 28.

30. Installation selon la revendication 29, **caractérisée en ce qu'**elle comporte un premier ensemble support (31) sur lequel sont montés plusieurs dispositifs distributeurs (1, 2) et un second ensemble support (32) sur lequel est ou sont montés le ou les organes moteurs (13a,15 28, 52) des mécanismes d'actionnement, ladite installation comportant de plus au moins un récipient de liquide(s) (6), au moins un élément indicateur (7) de la quantité de liquide dans le récipient (6), lequel est apte à émettre un signal représentatif de cette quantité vers une unité de calcul et de commande (10), programmable, apte à commander et contrôler selon les données d'un programme préétabli, le ou les organes moteurs (13a, 15, 28, 52) du ou des mécanismes d'actionnement de l'élément obturateur (8) et du moyen d'impulsion (9) de chaque dispositif distributeur (1, 2).

31. Installation selon la revendication 30, **caractérisée en ce que** les ensembles support (31), (32) sont mobiles l'un par rapport à l'autre et que l'un au moins des deux ensembles support est mobilisé par rapport à l'autre par un organe moteur (44, 49,) commandé par l'unité de calcul et de commande (10) afin que soient positionnés en vis à vis les uns des autres le ou les organes moteurs (13a, 15, 28) et la ou les tiges d'actionnement (12, 25) et poussoir (14) du dispositif distributeur (1, 2) sélectionné.

32. Installation selon la revendication 31, **caractérisée en ce que** les dispositifs distributeurs (1, 2) sont disposés sur le premier ensemble support (31) selon une circonférence de cercle et de manière radiale par rapport à cette dernière de façon à former une couronne.

33. Installation selon la revendication 32, **caractérisée en ce que** le second ensemble support (32) est disposé dans le premier et que la ou les tiges (12, 25) et poussoir (14) du ou des mécanisme(s) d'actionnement de chaque élément distributeur (1, 2) est ou sont horizontale(s) et radiale(s) à la couronne formée par les dispositifs distributeurs (1, 2).

34. Installation selon la revendication 33, **caractérisée en ce que** le premier ensemble support (31) est fixe et le second (32) est mobilisé par l'organe moteur (13a, 49).

35. Installation selon la revendication 34 et 18, **caractérisée en ce que** le second ensemble support (32) comprend une enceinte (32a) formant caisson, pourvue d'une paroi supérieure horizontale (34) et d'une paroi inférieure horizontale (35), dotées, chacune selon un axe vertical commun, d'un perçage traversant dans lequel est monté un palier de guidage en rotation sur un arbre vertical (38), solidaire du premier ensemble support (31) et disposé de manière centrée par rapport à la couronne formée par les dispositifs distributeurs (1), les deux parois supérieure (36) et inférieure (37) étant jointes l'une à l'autre par au moins deux parois latérales (39), (40), diamétralement opposées, normales à un même axe sécant et perpendiculaire à l'axe longitudinal de l'arbre de guidage (38), la première (39) de ces parois, selon un axe horizontal radial à l'arbre de guidage et radial au premier ensemble, étant dotée d'un perçage traversant dans lequel est engagée une bague pourvue, selon un axe horizontal radial à l'arbre de guidage et radial à la couronne formée par les dispositifs distributeur, d'un alésage traversant, de section droite polygonale, dans lequel est engagée une forme de fourreau (41), parallélépipédique, constituant un carter dont les parois supérieure (41a) et inférieure (41b) sont pourvues, chacune en vis à vis l'une de l'autre, d'une lumière traversante (41c) de passage de l'arbre vertical de guidage (38), lequel reçoit en fixation, dans la forme de fourreau (41), une couronne dentée (42), fixe avec laquelle est destinée à coopérer en engrènement un pignon denté (43) calé sur l'extrémité correspondante de l'arbre de sortie traversant de l'organe moteur (13a) d'entraînement en rotation du second ensemble support (32) autour de l'arbre de guidage (38) et ledit organe moteur (13a) étant solidaire de la forme de fourreau (41) et l'autre extrémité de son arbre traversant portant extérieurement à l'enceinte et en regard des dispositifs distributeurs (1), l'embout d'accouplement 13b, d'actionnement de la tige (12) de chaque élément obturateur (8), tandis que l'enceinte, sous l'organe d'actionnement sus cité, porte l'organe moteur (15) du mécanisme d'actionnement du moyen d'impulsion (9), l'organe moteur (13a) d'entraînement en rotation du second ensemble support (32) étant piloté par l'unité de contrôle et de commande (10) en sorte de déplacer les mécanismes d'actionnement vers le dispositif distributeur (1) choisi et les immobiliser temporairement dans l'axe des tige (12) et poussoir (14), la forme de fourreau (41) étant montée en coulissement dans l'alésage traversant de la bague, et les lumières traversantes (41c), pratiquées dans les parois inférieure (41b) et supérieure (41a) de la forme de fourreau (41) étant de forme oblongue et orientées de sorte que leur axe longitudinal se développe de manière radiale et sécante à l'axe longitudinal de symétrie de l'arbre de guidage (38), et un organe d'actionnement (41d), du genre vérin, étant fixé à la paroi arrière (40) de la forme de fourreau (41), et à la paroi de l'enceinte (32a), la forme de fourreau (41) sous l'action de cet organe étant déplacée dans l'alésage de la bague soit vers le dispositif distributeur (1) sélectionné de sorte que l'embout d'accouplement (13b) que porte l'organe moteur (13a) soit accouplé à la tige (12) de l'élément obturateur et le pignon (43) soit désaccouplé de la couronne (42), soit en sens inverse afin que l'embout (13b) d'accouplement soit désaccouplé de la tige (12) de l'élément obturateur (8) et le pignon (43) accouplé à la couronne dentée (42).

36. Installation selon la revendication 35, **caractérisée en ce que** le récipient (6) et l'élément indicateur (7) de la quantité de liquide dans ledit récipient (6) sont fixes par rapport au premier ensemble support (31) et occupent une position inférieure et coaxiale par rapport à la couronne que forme les dispositifs distributeurs (1), les conduites (4) de ces dispositifs étant coudées de façon à venir se situer par leur ajutage de délivrance (5) au dessus du récipient (6).

37. Installation selon la revendication 34 et la revendication 28, **caractérisée en ce que** le second ensemble support (32) comprend un arbre vertical (46) auquel est fixé de manière radiale un bras support (47) portant à distance de l'arbre, l'organe moteur (28) du moyen d'impulsion (9) et d'actionnement de l'élément obturateur (8), cet arbre vertical (46) étant engagé par son extrémité inférieure dans un palier de guidage en rotation, fixé à une platine inférieure (48) solidaire du premier élément support (31) et étant accouplé par son extrémité supérieure à l'arbre de sortie de l'organe moteur d'entraînement en rotation (49), lequel est fixé par son carter à une monture solidaire du premier ensemble support (31), ledit arbre (46), entre le bras support (47) et son extrémité supérieure, étant engagé dans un palier de guidage monté dans le perçage traversant d'une platine horizontale (45) du premier ensemble support (31), cette platine horizontale (45) recevant en fixation les dispositifs distributeurs (2), lesquels par leur corps de vanne sont toujours disposés le long d'une circonférence de cercle en sorte de former une couronne centrée par rapport à l'arbre d'entraînement (48), les dits dispositifs distributeurs (2) étant orientés de telle manière que la tige d'actionnement (25) de leur soupape (21) se développe de manière radiale à l'arbre (46) et soit tournée vers ce dernier, la section aval (4b) de conduite de chaque dispositif distributeur (2) étant engagée dans un perçage traversant de la platine support (45) pour venir se situer, par l'ajutage de distribution (5), au dessus d'une seconde platine support horizontale (50) disposée sous la première et à écartement de cette dernière, cette seconde platine support (50) étant fixée rigidement à l'arbre d'entraînement (46) de façon à être entraînée en rotation avec le bras support (47), le récipient (6) et l'élément indicateur (7) de la quantité de liquide dans le récipient étant installés sur la seconde platine (50), le récipient (6) étant positionné sur la platine (50) en sorte d'être dans l'axe de l'ajutage de délivrance (5) du dispositif distributeur (2) sélectionné pour la délivrance d'une quantité dosée du liquide.

38. Installation selon la revendication 30 et la revendication 28, **caractérisée en ce que** les deux ensembles support (31) (32) sont fixes l'un par rapport à l'autre, que le premier ensemble support (31) reçoit en fixation au moins un groupe de deux dispositifs distributeurs (2), que les deux dispositifs distributeurs (2) du groupe sont disposés de manière parallèle et symétrique par rapport à un plan géométrique vertical (P) et sont orientés en sorte que leur tiges d'actionnement (25) soient tournées dans la même direction, qu'à ce groupe de dispositifs distributeurs est associé un mécanisme d'actionnement qui lui est propre, constitué par un organe moteur (52) comportant un arbre de sortie rotatif disposé verticalement et une came (53) calée sur l'arbre de sortie de l'organe moteur, que l'arbre de sortie de l'organe moteur (52) du mécanisme d'actionnement est disposé de manière verticale, que l'axe géométrique de rotation de cet arbre de sortie est disposé dans le plan géométrique vertical de symétrie (P) et que la came (53), calée en rotation et translation sur l'arbre de sortie, présente deux surfaces de came verticales, disposées de manière symétrique par rapport à un plan géométrique vertical contenant l'axe de rotation de l'arbre de l'organe moteur, ladite came, par l'une de ses surfaces de came, étant destinée à être amenée par l'organe moteur en pression contre la tige du moyen d'impulsion et de la soupape de l'un des deux dispositifs distributeurs et par l'autre surface de came contre la tige de l'autre dispositif.

39. installation selon la revendication 38, **caractérisée en ce qu'**elle est dotée de plusieurs récipients (6) montés de manière amovible sur un support mobile mû par un organe moteur piloté par l'unité de commande et de contrôle afin d'amener les récipients sous les ajutages de délivrance des dispositifs distributeur.

## Claims

1. Method for dispensing dosed amounts of a liquid contained in a storage tank (3), connected to a dispensing pipe (4) provided with a nozzle (5) for discharging the liquid toward a receiver (6) connected to a display element (7) which emits, in the form of a signal, a value representing the amount of liquid present in the receiver (3) and said pipe (4) remote from the nozzle (5) being connected to a blocking element (8) which, on demand, blocks or clears the passage for the liquid through the pipe (4) from the tank (3) toward the dispensing nozzle (5), the diameter of the dispensing nozzle (5) being such that the column of liquid in the pipe portion between the nozzle (5) and the blocking element (8), when the blocking element (8) is blocking the passage of the liquid, may be immobilised therein owing, in particular, to the forces of surface tensions, **characterised in that** it involves the following stages of operation, given in chronological order:
a) clearing the liquid passage between the tank (3) and the nozzle (5) by acting upon the blocking element (8) so that the liquid is able to fill the portion of pipe between the blocking element (8) and the dispensing nozzle (5);
b) blocking the liquid passage by acting on the blocking element (8) so as to interrupt the discharge of the liquid;
c) applying to the liquid column located between the blocking element (8) and the dispensing nozzle (5) at least one mechanical impetus of calibrated amplitude and/or intensity so as to expel a micro amount of liquid from the liquid column through the dispensing nozzle (5) toward the receiver (3);
d) comparing the value given by the display element (7) to a predetermined -reference value C1 representing the value of the dose to be dispensed, a tolerance value ΔC1 being attached to the value C1;
e) and repeating stages c) and d) while the value given by the display element (7) is not contained in the range of tolerance attached to the reference value C1.

2. Method for dispensing dosed amounts of liquid according to claim 1, **characterised in that**, during stage a) during which the liquid passage between the tank (3) and the nozzle (5) is cleared and liquid is also poured into the receiver, the value given by the display element (7) is continuously compared to a reference value C0 lower than the value C1 and close to it, and **in that** stage b) of said method is initiated when the value given by the display element is equal to the reference value C0, stages c), d) and e) then being initiated in succession.

3. Method for dispensing dosed amounts of liquid according to claim 1 or claim 2, **characterised in that** the mechanical impetuses which are to be transmitted to the liquid column are applied to the pipe.

4. Method for dispensing dosed amounts of liquid according to claim 1 or claim 2, **characterised in that** the mechanical impetuses to be transmitted to the liquid column are applied directly thereto.

5. Dispenser for delivering dosed amounts of liquid, **characterised in that** it comprises:
- a storage tank (3) containing the liquid to be dispensed,
- a dispensing pipe (4) connected to the tank (3) and provided with a nozzle (5) for discharging the liquid toward a receiver (6) connected to a display element (7) which emits in the form of a signal a value representing the amount of liquid present in the receiver (6),
- a blocking element (8) connected to the pipe (4) and placed remote from the nozzle (5), blocking or clearing on demand the liquid passage between the tank (3) and the nozzle (5), the area of the passage cross-section defined by the nozzle (5) being such that, when the blocking element (8) blocks the passage, the liquid column present in the pipe portion between the nozzle (5) and the blocking element (8) is immobilised in this portion owing in particular to the forces of surface tensions,
- an impetus means (9) located between the blocking element (8) and the nozzle (5) for delivery of the liquid, for transmitting to the liquid column located between the blocking element and the dispensing nozzle at least one calibrated mechanical impetus under whose influence a micro amount of liquid is expelled from the liquid column.

6. Device according to claim 5, **characterised in that** it comprises a rigid body (11) comprising a first through-aperture in which the pipe (4) is engaged, this rigid body comprising a second aperture opening on the one hand in the first through-aperture and on the other hand at one of its faces, said second aperture receiving the impetus means (9).

7. Device according to claim 5, **characterised in that** the wall of pipe is elastically deformable, at least in the first aperture of the rigid body (11).

8. Device according to claim 6 or claim 7, **characterised in that** the impetus means (9) comprises a pushbutton (14) which is transversely moveable relative the pipe (4) and is mounted so as to slide in the second aperture so as to exert a thrust on the pipe.

9. Device according to claim 8, **characterised in that** the impetus means (9) comprises an actuating mechanism (15) capable of moving the pushbutton (14) in a short translation movement toward the pipe (4).

10. Device according to claims 8 and 9 taken together, **characterised in that** the pushbutton actuating mechanism (15) is external to the rigid body (11).

11. Device according to claim (10), **characterised in that** the actuating mechanism (15) consists of a driving means of the jack type.

12. Device according to any one of claims 7 to 11,
**characterised in that** the rigid body (11), upstream of the second aperture in the direction of discharge of the liquid into the pipe (4), is provided with a third aperture opening on the one hand into the first through-aperture and on the other hand at one of its external faces, said third aperture receiving the blocking element (8).

13. Device according to claim 22, **characterised in that** the blocking element (8) comprises a rod (12) mounted, at least by its leading part, in the third aperture and, in the blocking position, pinching the flexible pipe (4) by the free end of its leading part.

14. Device according to claim 13, **characterised in that** the blocking element (8) comprises a mechanism (13) for actuating the rod (12).

15. Device according to claim 14, **characterised in that** the mechanism (13) for actuating the rod (12) is external to the rigid body (11).

16. Device according to any one of claims 13, to 15,
**characterised in that** the rod (12) is screw threaded and **in that** the third aperture is tapped to received said rod (12) by screwing, for adjusting the degree of constriction of the pipe (4) by the rod (12) and therefore the cross-section of the passage in the region of the blocking element and consequently the rate of liquid discharge.

17. Device according to claim (16), **characterised in that** the rod (12), at the free end of its trailing part is provided with an impression with which there co-operates, in an interlocking, torque- and rotation-transmitting manner, a motor-driven rotary drive fitting (13b) of the actuating mechanism (13).

18. Device according to claim (16), **characterised in that** the mechanism for actuating the rod (12) of the blocking element is equipped with a drive means (13a) to whose output shaft the drive fitting (13b) is coupled.

19. Dispenser according to claim (5), **characterised in that** the pipe (4) comprises an upstream section (4a) connected to the storage tank (3) and a downstream section (4b) at whose free end the dispensing nozzle (5) is formed and **in that** the blocking element (8) is a valve of the normally closed type to which are connected, on the one hand, the upstream section (4a) of pipe and, on the other hand, the downstream section (4b) of pipe, said valve comprising a valve body in which is formed a recess comprising an upstream part (17) and a downstream part (18) communicating with one another via a median part (19) of cylindrical shape, at whose opening, in the upstream part of the recess, is formed a closing component seat (20) against which rests, in the blocking position, a closing component (21) moveably mounted in the upstream part (17) of the recess, which part, via an aperture (23) made in the valve body, is connected to the upstream section (4a) of pipe, the downstream section (4b) of pipe, for its part, being connected to the median part (19) of the recess via a second aperture (24) made in the valve body, said valve body, along an axis normal to the closing component seat (20), being provided with a third through-aperture opening into the downstream part (13) of the recess, an actuating rod (25) of the closing component (21) engaging in said aperture, said rod (25) being connected to an actuating mechanism (27, 28) and said valve being connected to an impetus means (9).

20. Device according to claim (19), **characterised by** an aspiration means for returning the drops of liquid present in the region of the dispensing nozzle (5) by aspiration in the downstream section (4b) of pipe, in particular before applying impetuses to the liquid column.

21. Device according to claim 20, **characterised in that** the aspiration means consists of a piston (29) mounted in a bore made in the valve body, said bore being formed in the downstream part (18) of the recess and said piston (29) being connected to an actuating mechanism.

22. Device according to claim 21, **characterised in that** the piston (29) and the actuating mechanism constitute the impetus means (9).

23. Device according to claims 19 and 22 taken together, **characterised in that**:
- the piston (29) is formed round the rod (25) for actuating the closing component (21) and is fixed to said rod (25),
- the mechanism for actuating the piston is the mechanism for actuating said rod,
- the rod (25) and the closing component (21) are free relative to one another,
- and said rod (25) is moved by its actuating mechanism (27, 28) from a rest position in which it is spaced from the closing component (21) to one of its actuating positions in which, by thrusting against the closing component (21), it keeps the closing component (21) spaced from its seat (20), the spacing between the closing component (21) and the seat (20) and therefore the flow rate of liquid depending on the actuating position reached by the actuating rod (25).

24. Device according to any one of claims 21 to 23,
**characterised by** an elastic member (30) mounted in the downstream part (19) of the recess and tensioned between the piston (29) and a shoulder (19a) formed between the said part (18) and the median part (19).

25. Device according to any one of claims 19 to 23,
**characterised by** an elastic restoring member (21a) accommodated in the upstream part (17) of the recess and holding the closing component (21) against its seat (20) in the blocking position of the valve.

26. Device according to any one of claims 19 to 25,
**characterised in that** the closing component (20) consists of a ball.

27. Device according to any one of claims 19 to 26,
**characterised in that** the material constituting the closing component (21) is harder than the material constituting the closing component seat (20).

28. Device according to any one of claims 19 to 27,
**characterised in that** the actuating mechanism for the impetus means (9) and for the blocking element consists of a cam (27) and a drive means (28) for driving the cam, said cam (27) being wedged on the rotating output shaft of the drive means (28).

29. Installation for automatically dispensing precise amounts of one or more liquids to one or more receiver(s) (6), **characterised in that** it is equipped with at least one dispenser (1, 2) according to any one of claims 5 to 28.

30. Installation according to claim 29, **characterised in that** it comprises a first support assembly (31) on which are mounted a plurality of dispensers (1, 2) and a second support assembly (32) on which is or are mounted the drive means (13a, 15, 28, 52) for the actuating mechanisms, said installation also comprising at least one liquid receiver (6), at least one display element (7) for the quantity of liquid in the receiver (6), which element is capable of emitting a signal representing this quantity to a programmable computational and control unit (10) capable of controlling and monitoring, in accordance with the data of a predetermined programme, the drive means (13a, 15, 28, 52) of the actuating mechanism(s) for the blocking element (8) and for the impetus means (9) of each dispenser (1, 2).

31. Installation according to claim 30, **characterised in that** the support assemblies (31, 32) are moveable relative to one another and **in that** at least one of the two support assemblies is moved relative to the other by a drive means (44, 49) controlled by the computational and control unit 10 so that the drive means (13a, 15, 28) and the actuating rod or rods (12, 25) and pushbutton (14) for the selected dispenser (1, 2) are positioned opposite one another.

32. Installation according to claim 31, **characterised in that** the dispensers (1, 2) are disposed on the first support assembly (31) in a circumference of a circle and radially thereto so as to form a crown.

33. Installation according to claim 32, **characterised in that** the second support assembly (32) is disposed in the first and **in that** the rod or rods (12, 25) and pushbutton (14) of the actuating inechanism(s) for each dispenser (1, 2) is or are horizontal and radial to the crown formed by the dispensers (1, 2).

34. Installation according to claim 33, **characterised in that** the first support assembly (31) is stationary and the second (32) is moved by the drive means (13a, 49).

35. Installation according to claim 34 and 18, **characterised in that** the second support assembly (32) comprises a chamber (32a) forming a box provided with a horizontal upper wall (34) and a horizontal lower wall (35) equipped, each along a common vertical axis, with a through-aperture in which is mounted a bearing for rotatable guidance on a vertical shaft (38) integral with the first support assembly (31) and disposed in a centred manner relative to the crown formed by the dispensers (1), the upper wall (36) and lower wall (37) being joined to one another by at least two diametrically opposed lateral walls (39, 40) normal to the same secant axis and perpendicular to the longitudinal axis of the guide shaft (36), the first (39) of these walls, along a horizontal axis radial to the guide shaft and radial to the first assembly being provided with a through-aperture in which is engaged a ring provided, along a horizontal axis radial to the guide shaft and radial to the crown formed by the dispensers, with a through-bore of polygonal cross-section, in which there engages a form of parallelepiped sleeve (41) constituting a housing of which the upper wall (41a) and lower wall (41b) are provided, each opposite the other, with a through-orifice (41c) for passage of the vertical guide shaft (38) which receives in a fixed manner, in the sleeve form (41), a stationary toothed crown (42) with which meshes a toothed pinion (43) wedged on the corresponding end of the continuous output shaft of the drive means (13a) for rotating the second support assembly (32) around the guide shaft (38) and said drive means (13a) being integral with the sleeve form (41) and the other end of its continuous shaft carrying, externally to the chamber end opposite the dispensers (1), the coupling fitting (13b) for actuating the rod (12) of each blocking element (8) whereas the chamber below the aforementioned actuating means carries the drive means (15) of the mechanism for actuating the impetus means (9), the drive means (13a) for rotating the second support assembly (32) being controlled by the monitoring and control unit (10) so as to displace the actuating mechanisms toward the selected dispenser (1) and to immobilise them temporarily in the axis of the rod (12) and pushbutton (14), the sleeve form (41) being mounted in a sliding manner in the through-bore of the ring and the through-orifices (41c) made in the lower wall (41b) and upper wall (41a) of the sleeve form (41) being oblong in shape and being oriented so that their longitudinal axis develops in a radial and secant manner to the longitudinal axis of symmetry of the guide shaft (38) and an actuating means (41d) of the jack type being fixed to the rear wall (40) of the sleeve form (41) and to the wall of the chamber (32a), the sleeve form (41) being displaced by the action of this means, in the bore of the ring either toward the dispenser (1) selected so that the coupling fitting (13b) carried by the drive means (13a) is coupled to the rod (12) of the blocking element and the pinion (43) is uncoupled from the crown (42) either in the opposite direction so that the coupling fitting (13b) is uncoupled from the rod (12) of the blocking element (8) and the pinion (43) coupled to the toothed crown (42).

36. Installation according to claim 35, **characterised in that** receiver (6) and the display element (7) for the amount of liquid in said receiver (6) are stationary relative to the first support assembly (31) and occupy a lower position coaxial to the crown formed by the dispensers (1), the pipes (4) of these devices being bent so that their delivery nozzle (5) is located above the receiver (6).

37. Installation according to claim 34 and 28, **characterised in that** the second support assembly (32) comprises a vertical shaft (46) to which there is radially fixed a supporting arm (47) carrying, remote from the shaft, the drive means (28) for the impetus means (9) and for actuating the blocking element (8), the vertical shaft (46) being engaged by its lower end in a bearing for rotatable guidance fixed to a lower plate (48) integral with the first support element (31) as being coupled by its upper end to the output shaft of the rotational drive means (49) which is fixed by its housing on a mount integral with the first support assembly (31), said shaft (46), between the supporting arm (47) and its upper end being engaged in a guide bearing mounted in the through-aperture of a horizontal plate (45) of the first support assembly (31), this horizontal plate (45) receiving the dispensers (2) in a fixed manner, the dispensers (2) always being disposed via their valve body along a circumference of a circle so as to form a crown which is centred relative to the drive shaft (48), said dispensers (2) being orientated in such a way that the actuating rod (25) for their closing component (21) is developed radially to the shaft (46) and is turned toward it, the downstream section (4b) of pipe of each dispenser (2) being engaged in a through-aperture of the supporting plate (45) and being located via the distributing nozzles, above a second horizontal supporting plate (50) disposed below the first and at a distance from it, this second supporting plate (50) being rigidly fixed to the drive shaft (46) so as to be rotated with the supporting arm (47), the receiver (6) and the display element (7) for the quantity of liquid in the receiver being installed on the second plate 50, the receiver (6) being positioned on the plate (50) so as to be in the axis of the delivery nozzle (5) of the dispenser (2) selected for delivery of a dosed amount of liquid.

38. Installation according to claim 30 and 28, **characterised in that** the two support assemblies (31, 32) are fixed relative to one another, **in that** the first support assembly (31) receives, in a fixed manner, at least one group of two dispensers (2), **in that** the two dispensers (2) of the group are disposed parallel and symmetrically to a vertical geometric plane (P) and are orientated such that their actuating rods (25) and turned in the same direction, **in that** this group of dispensers has its own actuating mechanism formed by a drive means (52) comprising a vertically disposed rotating output shaft and a cam (53) wedged on the output shaft of the drive means, **in that** the output shaft of the drive means (52) of the actuating mechanism is disposed vertically, **in that** the geometric axis of rotation of this output shaft is disposed in the vertical geometric plane of symmetry (P) and **in that** the cam (53), wedged in rotation and translation on the output shaft, has two vertical cam surfaces disposed symmetrically about a vertical geometric plane containing the axis of rotation of the shaft of the drive means, said cam, via one of its cam surfaces, being adapted to be pressed by the drive means against the rod of the impetus means and of the closing component of one of the two dispensers and by the other cam surface against the rod of the other dispenser.

39. Installation according to claim 38, **characterised in that** it is provided with a plurality of receivers (6) mounted removeably on a moving support which is moved by a drive means controlled by the control and monitoring unit so as to bring the receivers beneath the delivery nozzles of the dispensers.

## Patentansprüche

1. Verfahren zum Abgeben von dosierten Mengen einer Flüssigkeit, die in einem Vorratsbehälter (3) enthalten ist, der an eine Abgabeleitung (4) angeschlossen ist. die mit einer Flüssigkeitsausflußdüse zu einem Behältnis (6) hin versehen ist, das mit einer Anzeigeeinrichtung (7) verbunden ist, die in Form eines Signals einen Wert liefert, der die Flüssigkeitsmenge repräsentiert, die sich in dem Behälter (3) und in der Leitung (4) in einem Abstand zur Düse (5) befindet, wobei die Leitung mit einer Verschlußeinrichtung (8) gekoppelt ist, welche auf Anweisung den Durchfluß der Flüssigkeit durch die Leitung (4) von dem Behältnis (3) hin zur Abgabedüse (5) sperrt oder freigibt, wobei der Durchmesser des Abgabedüse (5) derart ist, daß die Flüssigkeitssäule in dem Leitungsabschnitt zwischen der Düse (5) und der Verschlußeinrichtung (8) unter dem Einfluß insbesondere von Oberflächenspannungskräften dort unbeweglich gemacht werden kann, sofern die Verschlußeinrichtung den Durchfluß von Flüssigkeit sperrt, **gekennzeichnet durch** die folgenden, in zeitlicher Reihenfolge angegebenen Verfahrensschritte:
a) - Freigeben des Durchflusses von Flüssigkeit zwischen dem Behälter (3) und der Düse (5) **durch** Einwirken auf die Verschlußeinrichtung (8) derart, daß der Leitungsabschnitt zwischen der Verschlußeinrichtung (8) und der Abgabedüse (5) sich mit Flüssigkeit füllen kann,
b) - Sperren des Flüssigkeitsdurchflusses **durch** Einwirken auf die Verschlußeinrichtung (8), um den Ausfluß von Flüssigkeit zu unterbrechen,
c) - Abgeben wenigstens eines mechanischen Impulses mit kalibrierter Amplitude und/oder kalibrierter Intensität an die zwischen der Verschlußeinrichtung (8) und der Abgabedüse (5) liegende Flüssigkeitssäule. um aus der Flüssigkeitssäule eine Mikromenge von Flüssigkeit **durch** die Abgabedüse (5) zum Behältnis (3) hin auszustoßen,
d) - Vergleichen des von der Anzeigeeinrichtung (7) angegebenen Werts mit einem vorbestimmten Sollwert C1, der den Wert der zu liefernden Dosierung repräsentiert, wobei in dem Wert C1 ein Toleranzwert ΔC1 eingebunden ist,
e) und Wiederholen der Verfahrensschritte c) und d) solange, bis der von der Anzeigeeinrichtung (7) angegebene Wert nicht innerhalb des im Sollwert C1 eingebundenen Toleranzbereichs enthalten ist.

2. Verfahren nach Anspruch 1, **dadurch gekennzeichnet, daß** während des Verfahrensschritts a), bei welchem der Flüssigkeitsdurchfluß zwischen dem Behälter (3) und der Düse (5) freigegeben ist und sich auch Flüssigkeit in das Behältnis ergießt, der von der Anzeigeeinrichtung (7) angegebene Wert kontinuierlich mit einem Sollwert C0 verglichen wird, der kleiner als der Wert C1 und zu diesem letzteren benachbart ist, und daß der Verfahrensschritt b) durchgeführt wird, wenn der von der Anzeigeeinrichtung angegebene Wert gleich dem Sollwert C0 ist, wobei anschließend die Verfahrensschritte c), d) und e) nacheinander durchgeführt werden.

3. Verfahren nach Anspruch 1 oder 2, **dadurch gekennzeichnet, daß** die mechanischen Impulse, die auf die Flüssigkeitssäule übertragen werden sollen, an die Leitung abgegeben werden

4. Verfahren nach Anspruch 1 oder 2, **dadurch gekennzeichnet, daß** die mechanischen Impulse, die auf die Flüssigkeitssäule übertragen werden sollen, unmittelbar an die Flüssigkeitssäule abgegeben werden.

5. Vorrichtung zum Abgeben dosierter Mengen einer Flüssigkeit, **gekennzeichnet durch**:
- einen Vorratsbehälter (3), der die abzugebende Flüssigkeit enthält,
- eine Abgabeleitung (4), die an den Behälter (3) angeschlossen ist und mit einer Flüssigkeitsausflußdüse (5) zu einem Behältnis (6) hin versehen ist, das mit einer Anzeigeeinrichtung (7) gekoppelt ist, die in Form eines Signals einen Wert liefert, der die Flüssigkeitsmenge repräsentiert, die sich in dem Behältnis (6) befindet,
- eine Verschlußeinrichtung (8), die mit der Leitung (4) gekoppelt ist und in einem Abstand zur Düse (5) angeordnet ist sowie gesteuert den Durchfluß von Flüssigkeit zwischen dem Behälter (3) und der Düse (5) sperrt oder freigibt, wobei die Durchlaßquerschnittsfläche, welche die Düse (5) festlegt, derart ist, daß bei Sperrung des Durchflusses **durch** die Verschlußeinrichtung (8) die in dem Leitungsabschnitt zwischen der Düse (5) und der Verschlußeinrichtung (8) stehende Flüssigkeitssäule in diesem Abschnitt unter dem Einfluß insbesondere von Oberflächenspannungskräften unbeweglich gehalten ist,
- eine Impulseinrichtung (9), die zwischen der Verschlußeinrichtung (8) und der Flüssigkeitsabgabedüse (5) angeordnet ist, um auf die zwischen der Verschlußeinrichtung und der Abgabedüse befindliche Flüssigkeitssäule wenigstens einen kalibrierten mechanischen Impuls zu übertragen, unter dessen Wirkung eine Mikromenge von Flüssigkeit aus der Flüssigkeitssäule ausgestoßen wird.

6. Vorrichtung nach Anspruch 5, **dadurch gekennzeichnet, daß** sie einen starren Körper (11) umfaßt, der eine erste Durchgangsbohrung aufweist, in die die Leitung (4) eingesetzt ist, wobei dieser starre Körper eine zweite Bohrung aufweist, die einerseits in die erste Durchgangsbohrung und andererseits in einer seiner Seiten mündet, wobei die zweite Bohrung die Impulseinrichtung (9) aufnimmt.

7. Vorrichtung nach Anspruch 5, **dadurch gekennzeichnet, daß** die Wand der Leitung wenigstens in der ersten Bohrung des starren Körpers (11) elastisch verformbar ist.

8. Vorrichtung nach Anspruch 6 oder 7, **dadurch gekennzeichnet, daß** die Impulseinrichtung (9) einen Stößel (14) umfaßt, der quer zur Leitung (4) beweglich und in der zweiten Bohrung gleitend montiert ist. um gegen die Leitung einen Stoß ausüben zu können.

9. Vorrichtung nach Anspruch 8, **dadurch gekennzeichnet, daß** die Impulseinrichtung (9) einen Betätigungsmechanismus (15) umfaßt, der den Stößel (14) in einer kurzen Translationsbewegung in Richtung auf die Leitung (4) bewegen kann.

10. Vorrichtung nach den Ansprüchen 8 und 9, **dadurch gekennzeichnet, daß** der Betätigungsmechanismus (15) des Stößels außerhalb des starren Körpers (11) liegt.

11. Vorrichtung nach Anspruch 10, **dadurch gekennzeichnet, daß** der Betätigungsmechanismus durch eine Antriebseinrichtung vom Typ Zylinder gebildet ist.

12. Vorrichtung nach einem der Ansprüche 7 bis 11, **dadurch gekennzeichnet, daß** der starre Körper (11) stromaufwärts von der zweiten Bohrung hinsichtlich der Fließrichtung der Flüssigkeit in der Leitung (4) mit einer dritten Bohrung versehen ist, die einerseits in die erste Durchgangsbohrung und andererseits an einer seiner Außenseiten mündet, wobei die dritte Bohrung die Verschlußeinrichtung (8) aufnimmt.

13. Vorrichtung nach Anspruch 12. **dadurch gekennzeichnet, daß** die Verschlußeinrichtung (8) einen Schaft (12) umfaßt, der wenigstens mit seinem Vorderteil in die dritte Bohrung eingesetzt ist und in der Schließstellung mit dem freien Ende seines Vorderteils die elastische Leitung (4) zusammendrückt.

14. Vorrichtung nach Anspruch 13, **dadurch gekennzeichnet, daß** die Verschlußeinrichtung (8) einen Betätigungsmechanismus (13) des Schafts (12) umfaßt.

15. Vorrichtung nach Anspruch 14, **dadurch gekennzeichnet, daß** der Betätigungsmechanismus (13) des Schafts (12) außerhalb des starren Körpers (11) liegt.

16. Vorrichtung nach einem der Ansprüche 13 bis 15, **dadurch gekennzeichnet, daß** der Schaft (12) mit einem Gewinde versehen ist und daß die dritte Bohrung mit einem Innengewinde versehen ist, um den Schaft (12) durch Einschraubung aufzunehmen, was ein Einstellen des Grads der Querschnittsverminderung der Leitung (4) durch den Schaft (12) also des Durchlaßquerschnitts auf Höhe der Verschlußcinrichtung und folglich der Durchflußmenge der Flüssigkeit zuläßt.

17. Vorrichtung nach Anspruch 16, **dadurch gekennzeichnet, daß** der Schaft (12) an dem freien Ende seines Hinterteils mit einer Vertiefung versehen ist, mit der formschlüssig und zur Übertragung eines Drehmoments und einer Drehbewegung ein Antriebsfortsatz (13b) zusammenwirkt, der drehend von dem Betätigungsmechanismus (13) angetrieben wird.

18. Vorrichtung nach Anspruch 16, **dadurch gekennzeichnet, daß** der Betätigungsmechanismus des Schafts (12) der Verschlußeinrichtung mit einer Antriebseinrichtung (13a) mit einer Abtriebswelle ausgestattet ist, mit der der Antriebsfortsatz (13b) gekoppelt ist.

19. Vorrichtung nach Anspruch 5, **dadurch gekennzeichnet, daß** die Leitung (4) stromaufwärts ein Teilstück (4a), das an den Vorratsbehälter (3) angeschlossen ist, und stromabwärts ein Teilstück (4b) mit einem freien Ende umfaßt, an dem die Abgabedüse (5) gebildet ist, und daß die Verschlußeinrichtung (8) ein normalerweise geschlossenes Ventil ist, an das einerseits das stromaufwärts liegende Teilstück (4a) der Leitung und andererseits das stromabwärts liegende Teilstück (4b) der Leitung angeschlossen ist, wobei das Ventil einen Ventilkörper aufweist, in welchem ein Freiraum ausgebildet ist, der einen stromaufwärts liegenden Teil (17) und einen stromabwärts liegenden Teil (18) aufweist, die miteinander über einen zylindrisch geformten Mittelteil (19) in Verbindung stehen, an dessen Einmündung im stromaufwärts liegenden Teil des Freiraums ein Ventilsitz (20) ausgebildet ist, gegen welchen sich ein Ventil (21) in Schließstellung abstützt, das beweglich in dem stromaufwärts liegenden Teil (17) des Freiraums montiert ist, wobei dieser Teil aufgrund einer in dem Ventilkörper ausgebildeten Bohrung (23) mit dem stromaufwärts liegenden Teilstück (4a) der Leitung in Verbindung steht, wobei das stromabwärts liegende Teilstück (4b) der Leitung mit dem Mittelteil (19) des Freiraums über eine zweite Bohrung (24) in Verbindung steht, die in dem Ventilkörper ausgebildet ist, wobei der Ventilkörper längs einer zum Ventilsitz (20) senkrechten Achse mit einer dritten Durchgangsbohrung versehen ist. die in den stromabwärts liegenden Teil (18) des Freiraums mündet und in welche ein Betätigungsschaft (25) des Ventils (21) eingesetzt ist, wobei der Schaft (25) mit einem Betätigungsmechanismus (27, 28) und das Ventil mit der Impulseinrichtung (9) gekoppelt sind.

20. Vorrichtung nach Anspruch 19, **gekennzeichnet durch** eine Saugeinrichtung, um Flüssigkeitstropfen, die sich auf Höhe der Abgabedüse (5) befinden, **durch** Ansaugen in das stromabwärts liegende Teilstück (4b) der Leitung zurückzuführen und zwar insbesondere vor der Abgabe von Impulsen an die Flüssigkeitssäule.

21. Vorrichtung nach Anspruch 20, **dadurch gekennzeichnet, daß** die Saugeinrichtung durch einen Kolben (29) gebildet ist, der in einer in dem Ventilkörper ausgebildeten Bohrung eingesetzt ist. wobei die Bohrung in dem stromabwärts liegenden Teil (18) des Freiraums ausgebildet ist und der Kolben (29) mit einem Betätigungsmechanismus gekoppelt ist.

22. Vorrichtung nach Anspruch 21, **dadurch gekennzeichnet, daß** der Kolben (29) und der Betätigungsmechanismus die Impulseinrichtung (9) bilden.

23. Vorrichtung nach beiden Ansprüchen 19 und 22, **dadurch gekennzeichnet, daß**:
- der Kolben (29) um den Betätigungsschaft (25) des Ventils (21) geformt und an dem Schaft (25) befestigt ist,
- der Betätigungsmechanismus des Kolbens der Betätigungsmechanismus des Schafts ist,
- der Schaft (25) und das Ventil (21) im Verhältnis zueinander frei sind ,
- und der Schaft (25) durch seinen Betätigungsmechanismus (27, 28) von einer Ruhestellung, in welcher er von dem Ventil (21) entfernt ist, hin zu einer seiner Betätigungsstellungen bewegt wird, in welchen er unter Ausübung von Druck auf das Ventil (21) letzteres in einem Abstand von seinem Sitz (20) hält, wobei der Wert des Abstands zwischen dem Ventil (21) und dem Sitz (20) und damit der Wert der Flüssigkeitsdurchflußmenge von der durch den Betätigungsschaft (25) eingenommenen Betätigungsstellung abhängen.

24. Vorrichtung nach einem der Ansprüche 21 bis 23, **gekennzeichnet durch** ein elastisches Bauteil (30), das in dem stromabwärts liegenden Teil (18) des Freiraums unter Spannung zwischen dem Kolben (29) und einem Absatz (19a) eingesetzt ist, der zwischen dem Teil (18) und dem Mittelteil (19) ausgebildet ist.

25. Vorrichtung nach einem der Ansprüche 19 bis 23, **gekennzeichnet durch** ein elastisches Rückstellbauteil (2 la), das in dem stromaufwärts liegenden Teil (17) des Freiraums untergebracht ist und das Abstützen des Ventils (21) gegen dessen Sitz (20) in Schließstellung des Ventils sichert.

26. Vorrichtung nach einem der Ansprüche 19 bis 25, **dadurch gekennzeichnet, daß** das Ventil (20) durch eine Kugel gebildet ist.

27. Vorrichtung nach einem der Ansprüche 19 bis 26, **dadurch gekennzeichnet, daß** das das Ventil (21) bildende Material eine höhere Festigkeit aufweist als das Material, das den Ventilsitz (20) bildet.

28. Vorrichtung nach einem der Ansprüche 19 bis 27, **dadurch gekennzeichnet, daß** der Betätigungsmechanismus der Impulseinrichtung (9) und der Verschlußeinrichtung durch eine Nocke (27) und eine Antriebseinrichtung (28) der Nocke gebildet ist, wobei die Nocke (27) auf der Abtriebswelle der Antriebseinrichtung (28) festsitzt.

29. Einrichtung zum automatischen Abgeben präziser Mengen einer oder mehrerer Flüssigkeiten an ein oder mehrere Behältnisse (6), **dadurch gekennzeichnet, daß** sie mit wenigstens einer Abgabevorrichtung (1, 2) gemäß einem der Ansprüche 5 bis 28 ausgestattet ist.

30. Einrichtung nach Anspruch 29, **dadurch gekennzeichnet, daß** sie einen ersten Gesamtträger (31), an welchem mehrere Abgabevorrichtungen (1, 2) angebracht sind, und einen zweiten Gesamtträger (32) umfasst. an welchem die Antriebseinrichtung oder die Antriebseinrichtungen (13a, 15, 28, 52) der Betätigungsmechanismen angebracht ist oder sind, wobei die Einrichtung außerdem wenigstens ein Behältnis (6) für eine Flüssigkeit (Flüssigkeiten) und wenigstens eine Anzeigeeinrichtung (7) der Flüssigkeitsmenge in dem Behältnis (6) aufweist, die ein diese Menge repräsentierendes Signal an eine programmierbare Rechen- und Steuereinheit (10) ausgeben kann, die mit den Daten eines vorinstallierten Programms die Antriebseinrichtung oder die Antriebseinrichtungen (13a, 15, 28, 52) des oder der Betätigungsmechanismen der Verschlußeinrichtung (8) und der Impulseinrichtung (9) jeder Abgabevorrichtung (1, 2) steuern und regulieren kann.

31. Einrichtung nach Anspruch 30, **dadurch gekennzeichnet, daß** die Gesamtträger (31, 32) zueinander beweglich sind und daß wenigstens einer der zwei Gesamtträger bezüglich des anderen durch eine Antriebseinrichtung (44, 49) bewegt wird, die von der Rechen- und Steuereinheit (10) gesteuert ist, um die Antriebseinrichtung oder die Antriebseinrichtungen (13a, 15, 28) und den oder die Betätigungsschäfte (12, 25) und Stößel (14) der ausgewählten Abgabevorrichtung (1, 2) einander gegenüber zu positionieren.

32. Einrichtung nach Anspruch 31, **dadurch gekennzeichnet, daß** die Abgabevorrichtungen (1, 2) an dem ersten Gesamtträger (31) in einer Kreisanordnung und zwar radial bezüglich dieser letzteren angeordnet sind, um einen Kranz zu bilden.

33. Einrichtung nach Anspruch 32, **dadurch gekennzeichnet, daß** der zweite Gesamtträger (32) im ersten angeordnet ist und daß der oder die Schäfte (12, 25) und Stößel (14) des oder der Betätigungsmechanismen jeder Abgabevorrichtung (1, 2) horizontal und radial zu dem durch die Abgabevorrichtungen (1, 2) gebildeten Kranz liegen.

34. Einrichtung nach Anspruch 33, **dadurch gekennzeichnet, daß** der erste Gesamtträger (31) feststeht und der zweite Gesamtträger (32) durch die Antriebseinrichtung (13a, 49) bewegt wird.

35. Einrichtung nach Anspruch 34 und 18, **dadurch gekennzeichnet, daß** der zweite Gesamtträger (32) eine ein Gehäuse bildende Hülle (32a) umfaßt, die mit einer oberen horizontalen Wand (34) und einer unteren horizontalen Wand (35) versehen ist, von denen jede auf einer gemeinsamen vertikalen Achse eine Durchgangsbohrung aufweist. in der ein Dreh-Führungslager auf einer vertikalen Welle (38) angeordnet ist, die mit dem ersten Gesamtlräger (31) fest verbunden und zentriert bezüglich des durch die Abgabevorrichtungen (1) gebildeten Kranzes angeordnet ist, wobei die obere und untere Wand (36, 37) miteinander durch wenigstens zwei Seitenwände (39, 40) verbunden sind, die diametral und senkrecht zu einer gleichen Achse gegenüberliegend angeordnet sind, welche die Längsachse der Führungswelle (38) schneidet und zu dieser senkrecht ist, wobei die erste Seitenwand (39) auf einer horizontalen, radial zur Führungswelle und radial zum ersten Gesamtträger liegenden Achse mit einer Durchgangsbohrung versehen ist, in der ein Ring eingesetzt ist, der auf einer horizontalen, radial zur Führungswelle und radial zum durch die Abgabevorrichtungen gebildeten Kranz liegenden Achse eine Durchgangsbohrung mit einem polygonalen Querschnitt aufweist, in der eine Hülsenform als Parallelepipedon eingebracht ist, die ein Gehäuse bildet, dessen obere (41a) und untere Wand (41b) jeweils einander gegenüberliegend ein Durchgangs-Langloch (41c) für den Durchgang der vertikalen Führungswelle (38) aufweisen, welche in der Hülsenform (41) einen an dieser befestigten Zahnring (42) fest aufnimmt, der dazu bestimmt ist, kämmend mit einem Zahnrad (43) zusammenzuwirken, das auf dem entsprechenden Ende der durchgehenden Abtriebswelle der Antriebseinrichtung (13a) eines Drehantriebs des zweiten Gesamtträgers (32) um die Führungswelle (38) festsitzt, wobei die Antriebseinrichtung (13a) mit der Hülsenform (41) fest verbunden ist und das andere Ende seiner Durchgangswelle außerhalb des Gehäuses und gegenüber der Abgabevorrichtungen (1) einen Koppelungsfortsatz (13b) zur Betätigung des Schafts (12) jeder Verschlußeinrichtung (8) trägt, während das Gehäuse unter dem erwähnten Betätigungsbauteil die Antriebseinrichtung (15) des Betätigungsmechanismus einer Impulseinrichtung (9) trägt. wobei die Antriebseinrichtung (13a) eines Drehantriebs des zweiten Gesamtträgers (32) von der Regulierungs- und Steuereinheit (10) gesteuert ist. um die Betätigungsmechanismen zur gewählten Abgabevorrichtung (1) hin zu verlagern und um sie zeitweise auf der Achse des Schafts (12) und des Stößels (14) festzuhalten, wobei die Hülsenform (41) in einer Gleitanordnung in der Durchgangsbohrung des Ringes eingesetzt ist, und wobei die Durchgangs-Langlöcher (41c), die in der unteren (41b) und oberen Wand (41a) der Hülsenform (41) ausgebildet sind, eine Längsform aufweisen und derart ausgerichtet sind, daß ihre Längsachse sich radial und die Symmetrielängsachse der Führungswelle (38) schneidend erstreckt, und wobei ein Betätigungsbauteil (41d) vom Typ Zylinder an der hinteren Wand (40) der Hülsenform (41) befestigt ist, und wobei an der Wand des Gehäuses (32a) die Hülsenform unter der Einwirkung dieses Bauteils in der Bohrung des Ringes entweder in Richtung auf die gewählte Abgabevorrichtung (1) verschoben wird derart, daß der Kopplungsfortsatz (13b), den die Antriebseinrichtung (13a) trägt, mit dem Schaft (12) der Verschlußeinrichtung gekoppelt und das Zahnrad (43) von dem Kranz (42) entkoppelt ist, oder im entgegengesetzten Sinn, daß der Kopplungsfortsatz (13b) von dem Schaft (12) der Verschlußeinrichtung (8) entkoppelt und das Zahnrad (43) mit dem Zahnring (42) gekoppelt ist.

36. Einrichtung nach Anspruch 35, **dadurch gekennzeichnet, daß** das Behältnis (6) und die Anzeigeeinrichtung (7) der Flüssigkeitsmenge in dem Behältnis (6) in Bezug auf den ersten Gesamtträger (31) fest angeordnet sind und eine Position einnehmen, die unterhalb und koaxial bezüglich des durch die Abgabevorrichtungen (1) gebildeten Kranzes ist, wobei die Leitungen (4) dieser Vorrichtungen gebogen sind, um sich mit ihrer Abgabedüse (5) über dem Behältnis (6) zu positionieren.

37. Einrichtung nach Anspruch 34 und Anspruch 28, **dadurch gekennzeichnet, daß** der zweite Gesamtträger (32) eine vertikale Welle (46) umfaßt, an welcher radial ein Trägerarm (47) befestigt ist, der in einem Abstand von der Welle die Antriebseinrichtung (28) der Impulseinrichtung (9) und zur Betätigung der Verschlußeinrichtung (8) trägt, wobei diese vertikale Welle (46) mit ihrem unteren Ende in einer Drehführungslagerung montiert ist, die an einer unteren Tragplatte (48) befestigt ist, die mit dem ersten Gesamtträger (31) fest verbunden ist, und mit ihrem oberen Ende an die Abtriebswelle der Drehantriebseinrichtung (49) gekoppelt ist, welche mit ihrem Gehäuse an einem mit dem ersten Gesamtträger (31) fest verbundenen Gestell befestigt ist, wobei die Welle (46) zwischen dem Trägerarm (47) und ihrem oberen Ende in einer Führungslagerung gelagert ist, die in der Durchgangsbohrung einer horizontalen Tragplatte (45) des ersten Gesamtträgers (31) montiert ist, wobei diese horizontale Tragplatte (45) die Abgabevorrichtungen (2) fest aufnimmt, welche durch ihre Ventilkörper stets längs einer Kreisanordnung angeordnet sind, um einen Kranz zu bilden, der bezüglich der Antriebswelle (48) zentriert ist, wobei die Abgabevorrichtungen (2) derart ausgerichtet sind, daß sich der Betätigungsschaft (25) ihres Ventils (21) radial zur Welle (46) erstreckt und dieser zugewandt ist, wobei das stromabwärts liegende Teilstück (4b) der Leitung jeder Abgabevorrichtung (2) in eine Durchgangsbohrung der Tragplatte (45) eingesetzt wird, um sich mit der Abgabedüse (5) über einer zweiten horizontalen Tragplatte (50) zu positionieren, die unter der ersten Tragplatte und mit einem Abstand zur letzteren angeordnet ist, wobei diese zweite Tragplatte (50) starr mit der Antriebswelle (46) verbunden ist, um mit dem Tragarm (47) in Drehung versetzt zu werden, wobei das Behältnis (6) und die Anzeigeeinrichtung (7) der Flüssigkeitsmenge in dem Behältnis auf der zweiten Tragplatte (50) angebracht sind, wobei das Behältnis (6) auf der Tragplatte (50) so positioniert ist, daß es auf der Achse der Abgabedüse (5) der Abgabevorrichtung (2) liegt, die für die Abgabe einer dosierten Menge von Flüssigkeit ausgewählt ist.

38. Einrichtung nach Anspruch 30 und 28, **dadurch gekennzeichnet, daß** die beiden Gesamtträger (31, 32) aneinander befestigt sind, daß der erste Gesamtträger (31) wenigstens eine Gruppe zweier Abgabevorrichtungen (2) fest aufnimmt, daß die beiden Abgabevorrichtungen der Gruppe parallel und symmetrisch bezüglich einer geometrischen, vertikalen Ebene (P) angeordnet und derart ausgerichtet sind, daß ihre Betätigungsschäfte (25) in die gleiche Richtung gedreht sind, daß mit dieser Gruppe Abgabevorrichtungen ein zugehöriger Betätigungsmechanismus gekoppelt ist, der aus einer Antriebseinrichtung (52) gebildet ist, die eine vertikal angeordnete Drehabtriebswelle und eine Nocke (53) aufweist, die auf der Abtriebswelle des Motors festsitzt, daß die Abtriebswelle der Antriebseinrichtung (52) des Betätigungsmechanismus vertikal angeordnet ist, daß die geometrische Drehachse dieser Abtriebswelle in einer vertikalen geometrischen Symmetrieebene (P) angeordnet ist und daß die gegen Drehung und Verschiebung auf der Abtriebswelle festsitzende Nocke (53) zwei vertikale Nockenflächen aufweist, die symmetrisch bezüglich einer vertikalen geometrischen Ebene angeordnet sind, die die Drehachse der Welle der Antriebseinrichtung enthält, wobei die Nocke mit einer ihrer Nockenflächen dazu bestimmt ist, durch die Antriebseinrichtung Druck gegen den Schaft der Impulseinrichtung und des Ventils von einer der beiden Abgabevorrichtungen und mit der anderen Nockenfläche gegen den Schaft der anderen Vorrichtung auszuüben.

39. Einrichtung nach Anspruch 38, **dadurch gekennzeichnet, daß** sie mehrere Behältnisse (6) aufweist, die abnehmbar auf einem beweglichen Träger montiert sind, der von einer Antriebseinrichtung bewegt wird. die von einer Steuer- und Regulierungseinheit gesteuert ist, um die Behältnisse unter die Abgabedüsen der Abgabevorrichtungen zu bringen.
